# EUROPÄISCHE PATENTSCHRIFT

(11) **EP 3 894 796 B1**
(45) Veröffentlichungstag und Bekanntmachung des Hinweises auf die Patenterteilung: **25.05.2022**
(21) Anmeldenummer: 20761507.1
(22) Anmeldetag: 20.08.2020
(51) Int. Cl.: G01D 5/353, G01B 11/16, G01L 1/24, G01M 5/00, G01B 11/14, G01M 11/08

(54) **VERFAHREN ZUR DETEKTION DER MAXIMALEN AUSDEHNUNG VON RISSEN IN EINEM OBJEKT**
METHOD FOR DETECTING THE MAXIMUM EXPANSION OF CRACKS IN AN OBJECT
PROCÉDÉ DESTINÉ À DÉTECTER L'EXPANSION MAXIMALE DE FISSURES DANS UN OBJET

(30) Priorität: 23.08.2019 AT 507342019
(43) Veröffentlichungstag der Anmeldung: 20.10.2021
(73) Patentinhaber: AIT Austrian Institute of Technology GmbH, 1210 Wien (AT); Technische Universität Graz, 8010 Graz (AT)
(72) Erfinder: KWAPISZ, Maciej, 2640 Enzenreith (AT); VORWAGNER, Alois, 1090 Wien (AT); LIENHART, Werner, 8043 Graz (AT); MONSBERGER, Christoph, 8010 Graz (AT); WINKLER, Madeleine, 8010 Graz (AT)
(74) Vertreter: Wildhack & Jellinek
(86) Internationale Anmeldenummer: PCT/AT2020/060314
(87) Internationale Veröffentlichungsnummer: WO 2021/035265

(56) Entgegenhaltungen:
- OLIVER FISCHER ET AL: "Quasikontinuierliche faseroptische Dehnungsmessung zur Rissdetektion in Betonkonstruktionen", BETON UND STAHLBETONBAU., Bd. 114, Nr. 3, 14. März 2019 (2019-03-14) , Seiten 150-159, XP055734603, DE ISSN: 0005-9900, DOI: 10.1002/best.201800089

## Beschreibung

Die Erfindung betrifft ein Verfahren zur Detektion der maximalen Ausdehnung von Rissen in einem Objekt, insbesondere einem Bauwerk, innerhalb einer Zeitspanne gemäß dem Oberbegriff von Patentanspruch 1, eine Anordnung gemäß Patentanspruch 12 sowie Datenträger gemäß Patentanspruch 13 und 14.

Risse in Objekten können durch Veränderungen der mechanischen Spannungen im Objekt bei Überschreitung der aufnehmbaren Materialzugspannung entstehen. Risse und deren Veränderungen dienen beispielsweise in Bauwerken wie Brücken oder Tunnelinnenschalen aus Beton als Indikatoren für derartige Änderungen des mechanischen Spannungsregimes, sodass eine umfassende Registrierung und Dokumentation, insbesondere der Rissweiten und Veränderungen von Rissmustern für eine Zustandserfassung erforderlich ist. Rissweiten vorhandener Risse können bei Bauwerksinspektionen beispielsweise visuell anhand von Rissweitenschablonen bestimmt werden. Diese Vorgehensweise ermöglicht jedoch keine kontinuierliche Aufzeichnung der Rissweiten. Für ein automatisches Monitoring von Rissweitenveränderungen können Linear-Displacement-Transducers oder Fissurometer eingesetzt werden. Diese Messmethoden liefern jedoch nur an diskreten Punkten Messwerte und eine Bestimmung von Rissmustern ist nicht möglich. Das Dokument von Oliver Fischer et al.:
"Quasikontinuierliche faseroptische Dehnungsmessung zur Rissdetektion in Betonkonstruktionen",
Beton- und Stahlbetonbau, Bd. 114, Nr. 3, 14. März 2019 (2019-03-14), Seiten 150-159, zeigt ein mögliches Verfahren zur Rissdetektion.

Aus dem Stand der Technik sind Messsysteme basierend auf verteilter faseroptischer Messung (Distributed Fiber Optic Sensing, DFOS) zur Erfassung von Dehnungen mittels eines kontinuierlich am Messobjekt angebrachten Sensorkabels bekannt. Mit Hilfe von verteilten faseroptischen Messungen können Dehnungsmessungen an Objekten wie beispielsweise Bauwerken mit hoher Genauigkeit durchgeführt werden, sodass lokale Schäden wie Risse im Objekt bzw. Bauwerk identifiziert und lokalisiert werden können. Anhand der gemessenen, verteilten Dehnungsprofile entlang des Objektes kann auch die effektive Rissweite abgeleitet werden. Mit Hilfe von verteilten faseroptischen Messungen ist auch ein Rissmonitoring an bzw. in Objekten wie Bauwerken möglich, wobei in regelmäßigen Zeitabständen Messungen durchgeführt werden und anhand der gemessenen Deformationsverteilung die aktuelle Rissweite zum Messzeitpunkt abgeleitet wird. Bei derartigen aus dem Stand der Technik bekannten Verfahren ist es jedoch nicht möglich, eine Aussage darüber zu treffen, ob die aktuell gemessene Rissweite die maximale, im Beobachtungszeitraum aufgetretene, Rissweite des jeweiligen Risses darstellt, oder ob der Riss bereits eine größere Rissweite aufgewiesen und sich teilweise wieder geschlossen hat.

Aufgabe der Erfindung ist es daher, ein Verfahren zur Detektion der maximalen Ausdehnung von Rissen in einem Objekt, beispielsweise einem Bauwerk, zur Verfügung zu stellen, das eine Ermittlung der maximalen Rissweite, die innerhalb eines interessierenden Zeitraums aufgetreten ist, ermöglicht, ohne dass Dauermessungen unbedingt erforderlich sind.

Die Erfindung löst diese Aufgabe mit den kennzeichnenden Merkmalen von Patentanspruch 1. Erfindungsgemäß ist dabei vorgesehen,
- dass ein Modell vorgegeben wird, das für eine Anzahl von maximalen Rissweiten jeweils zumindest einen örtlichen Modell-Dehnungsmesswertverlauf aufweist, der die lokale Dehnung des Glasfaserkabels über einen Teil der Kabellänge des Glasfaserkabels im Bereich eines Risses mit der jeweiligen maximalen Rissweite vorgibt,
- dass zumindest ein Abschnitt innerhalb der verteilten Dehnungsmessgröße identifiziert wird, in dem die Dehnungswerte einen vorgegebenen Schwellenwert überschreiten,
- dass die ermittelte verteilte Dehnungsmessgröße in dem zumindest einen identifizierten Abschnitt mit den örtlichen Modell-Dehnungsmesswertverläufen des Modells in Übereinstimmung gebracht wird und nach derjenigen maximalen Rissweite gesucht wird, die demjenigen örtlichen Modell-Dehnungsmesswertverlauf zugeordnet ist, der am besten mit der ermittelten verteilten Dehnungsmessgröße im identifizierten Abschnitt übereinstimmt, und
- dass die bei optimaler Übereinstimmung im vorgegebenen Modell verwendete Rissweite als Messgröße für die maximale Rissweite des jeweiligen tatsächlichen Risses innerhalb der Zeitspanne im Objekt, insbesondere dem Bauwerk, angesehen wird.

Durch den Vergleich der aktuell gemessenen verteilten Dehnungsmessgröße bei einer aktuellen Rissweite mit den Modell-Dehnungsmesswertverläufen des Modells für maximale Rissweiten ist es auf besonders einfache Weise möglich, die innerhalb der Zeitspanne aufgetretene maximale Rissweite eines jeweiligen Risses im Objekt, beispielsweise einem Bauwerk, abzuleiten. Durch diesen Vergleich ist es vorteilhafterweise auch möglich, anhand der aktuell gemessenen verteilten Dehnungsmessgröße eine Aussage über die maximal aufgetretene Weite des jeweiligen Risses zu treffen, selbst wenn dieser sich bereits teilweise wieder geschlossen hat, wie dies beispielsweise bei einer Entlastung oder Längenänderung des Objekts durch Temperatur der Fall sein kann.

Unter dem Begriff Objekt wird im Zusammenhang mit der Erfindung jeder physische Körper verstanden. Dabei kann es sich beispielsweise um natürliche Objekte wie Boden und Fels- oder Eiskörper, jegliche Bauwerke mit und ohne raumbildende Funktion, Bauwerksteile, Fahrzeuge, Fluggeräte, Weltraumfluggeräte, Schiffe und Unterseeboote, aber auch um Anlagen und Anlagenteile handeln. Dabei ist lediglich entscheidend, dass sich das Objekt bzw. der zu untersuchende Körper für den Messvorgang im festen Aggregatszustand befindet.

Eine besonders einfache Ermittlung der tatsächlich aufgetretenen maximalen Rissweite anhand der Modell-Dehnungsmesswertverläufe des Modells kann gewährleistet werden, wenn das Modell für jede maximale Rissweite jeweils eine Vielzahl von örtlichen Modell-Dehnungsmesswertverläufen über einen Teil der Kabellänge des jeweiligen Glasfaserkabels umfasst, wobei jeder dieser, derselben maximalen Rissweite zugeordneten, örtlichen Modell-Dehnungsmesswertverläufe jeweils einem Dehnungsmesswertverlauf entspricht, der sich durch Entlastung des Glasfaserkabels nach Erreichen der maximalen Rissweite ergibt, wenn sich die zu einem jeweiligen Zeitpunkt aktuelle Rissweite im Lauf der Zeit verringert und bei dem jeweils ein Schlupf zwischen dem Glasfaserkabel und dem Hüllschichtaufbau als dauerhafte Verschiebung zurückbleibt.

Unter "Schlupf" wird im Zusammenhang mit der Erfindung eine dauerhafte Verschiebung bzw. eine Restverschiebung zwischen dem Glasfaserkabel und dem Hüllschichtaufbau verstanden. Unter dem Begriff "vorgegebene Grenzkraft" wird vorliegend eine Materialeigenschaft des Glasfaserkabels verstanden, die durch Materialversuche am jeweiligen Glasfaserkabel ermittelt, oder aus Messwerten einer am Objekt angebrachten Glasfaser mithilfe eines Modells rückgerechnet werden kann.

Eine weitere Steigerung der Genauigkeit der ermittelten maximalen Rissweite kann erzielt werden, wenn das Modell für zumindest eine Kombination, insbesondere eine Vielzahl vorgegebener Kombinationen, von Werkstoff, insbesondere Baustoff, Glasfaserkabel und Hüllschichtaufbau jeweils eine Vielzahl von örtlichen Modell-Dehnungsmesswertverläufen bei der jeweiligen maximalen Rissweite umfasst.

Da das Verhalten eines Objekts wie z.B. einem Bauwerk bei Be- und Entlastung je nach Werkstoff bzw. Baustoff variieren kann bzw. in diesem Fall auch das Glasfaserkabel eine unterschiedliche Dehnung bzw. Verschiebung gegenüber dem Hüllschichtaufbau erfahren kann, kann durch ein derart vorgegebenes Modell die Genauigkeit der Abschätzung der maximalen Rissweite weiter erhöht werden.

Eine besonders einfache Modellierung des Zusammenwirkens zwischen einem Objekt wie z.B. einem Bauwerk, Glasfaserkabel und Hüllschichtaufbau bei Be- und Entlastung kann erzielt werden, wenn als Modell ein durch eine Mehrzahl an vorgebbaren Parametern definiertes mechanisches Modell vorgegeben wird. Dabei können die Parameter des mechanischen Modells anhand von Referenzversuchen an einem Probekörper ermittelt werden. Auf diese Weise ist es möglich, rechnerisch für eine Vielzahl von maximalen Rissweiten und Be- bzw. Entlastungsstufen Modell-Dehnungsmesswertverläufe zu errechnen.

Alternativ dazu kann ein zuverlässiges Modell zur Ableitung der maximalen Rissweite empirisch ermittelt werden, indem das Modell bzw. die Modell-Dehnungsmesswertverläufe anhand von einer Vielzahl an Referenzversuchen an zumindest einem Probekörper ermittelt wird bzw. werden.

Eine besonders exakte Modellierung des Zusammenwirkens zwischen Objekt, Glasfaserkabel und Hüllschichtaufbau zur Ableitung von Modell-Dehnungsmesswertverläufen kann erzielt werden, wenn als Modell ein durch Vorgabe von Materialparametern bestimmtes mechanisches Modell vorgegeben wird, wobei der Verlauf der Dehnungswerte über die Kabellänge des Glasfaserkabels anhand des Zusammenwirkens zwischen verschiedenen mechanischen Elementen berechnet wird. Dabei werden folgende mechanische Elemente berücksichtigt:
- ein erstes, das Glasfaserkabel repräsentierendes, Stabelement mit einer linear elastischen Dehnsteifigkeit D₁ = E_{F}A_{F}, wobei E_{F} den Elastizitätsmodul und A_{F} die Querschnittsfläche des Glasfaserkabels angeben,
- ein zweites, den Hüllschichtaufbau repräsentierendes, Stabelement mit einer linear elastischen Dehnsteifigkeit D₂ = E_{S}A_{S}, wobei E_{S} den Elastizitätsmodul und A_{S} die Querschnittsfläche des Hüllschichtaufbaus angeben,
- ein nicht lineares, insbesondere elasto-plastisches, Federelement mit einer vorgegebenen Grenzkraft F_{S} und Steifigkeit kᵢₙₜ, das als Interaktionselement die Interaktion zwischen dem Glasfaserkabel und dem Hüllschichtaufbau repräsentiert, wobei bei Erreichen der vorgegebenen Grenzkraft ein Schlupf als bleibende Verschiebung des Hüllschichtaufbaus gegenüber dem Glasfaserkabel auftritt,
- und gegebenenfalls ein lineares, die Anbindung des Hüllschichtaufbaus an das Objekt, insbesondere das Bauwerk, repräsentierendes, Federelement mit einer Federsteifigkeit k.

Unter den elastischen Dehnsteifigkeiten D₁ und D₂ bzw. Elastizitätsmoduln E_{F}, E_{S}, der vorgegebenen Grenzkraft Fₛ, der Steifigkeit kᵢₙₜ sowie der Federsteifigkeit k werden vorliegend jeweils Materialeigenschaften verstanden, die durch Materialversuche an der jeweiligen Komponente ermittelt werden können, oder aus Messwerten einer am Objekt angebrachten Glasfaser mithilfe des Modells mit regressiven Methoden rückgerechnet werden können.

Eine besonders exakte Anpassung der im Modell verwendeten Parameter kann erzielt werden, wenn die im Modell verwendeten Parameter des Glasfaserkabels, des Hüllschichtaufbaus, des Interaktionselements und gegebenenfalls der Anbindung des Hüllschichtaufbaus an das Objekt, insbesondere das Bauwerk, anhand von Referenzversuchen angepasst werden. Dabei wird anhand des Modells für zumindest eine vorgegebene Kombination von Werkstoff, insbesondere Baustoff, Glasfaserkabel und Hüllschichtaufbau und für zumindest eine maximale Rissweite ein Modell-Dehnungsmesswertverlauf berechnet. Anschließend wird der Modell-Dehnungsmesswertverlauf mit dem, an zumindest einem Probekörper mit der vorgegebenen Kombination von Werkstoff, insbesondere Baustoff, Glasfaserkabel und Hüllschichtaufbau bei der jeweiligen maximalen Rissweite gemessenen, Verlauf der Dehnungswerte über die Kabellänge des Glasfaserkabels unter Anpassung der Parameter in Übereinstimmung gebracht.

Eine rechnerisch besonders einfache und exakte Bestimmung der im Modell verwendeten Parameter kann erzielt werden, wenn die Parameter des mechanischen Modells unter Anwendung eines Optimierungsverfahrens angepasst werden, bis eine vorgegebene Übereinstimmung der Randbereiche, insbesondere jeweils der Bereiche bis zum ersten lokalen Maximum, vorzugsweise dem Wendepunkt, der ermittelten verteilten Dehnungsmessgröße und des Modell-Dehnungsmesswertverlaufs, insbesondere unter Anwendung der Methode der kleinsten Quadrate, festgestellt wird.

Eine weitere Verbesserung der Genauigkeit, mit der Modell-Dehnungsmesswertverläufe für eine jeweilige Kombination von Werkstoff wie z.B. Baustoff, Glasfaserkabel und Hüllschichtaufbau bzw. eine jeweilige maximale Rissweite modelliert werden können, kann gewährleistet werden, wenn das Modell anhand einer Referenzversuchsreihe kalibriert wird. Dabei wird an zumindest einem Probekörper mit einer vorgegebenen Kombination von Werkstoff, insbesondere Baustoff, Glasfaserkabel und Hüllschichtaufbau eine verteilte faseroptische Versuchs-Referenzmessung im Glasfaserkabel vorgenommen und der jeweilige Probekörper zunächst belastet, bis sich ein Riss im Probekörper mit einer maximalen Rissweite öffnet, wobei die vorgegebene Grenzkraft überschritten wird und eine maximale Verschiebung bei der maximalen Rissweite zwischen dem Glasfaserkabel und dem Hüllschichtaufbau auftritt. Anschließend wird der Probekörper entlastet, wobei sich der Riss zumindest teilweise wieder schließt und ein Schlupf zwischen dem Glasfaserkabel und dem Hüllschichtaufbau als bleibende Verschiebung zurückbleibt. Während der Be- und Entlastung werden jeweils verteilte faseroptische Versuchs-Folgemessungen im Glasfaserkabel durchgeführt und basierend auf den Unterschieden zwischen der Versuchs-Referenzmessung und den verteilten faseroptischen Versuchs-Folgemessungen Verteilungen der durch den Riss im Probekörper bedingten Dehnungswerte über die Kabellänge ermittelt.

Eine besonders exakte Ermittlung der maximalen Rissweite, die innerhalb der interessierenden Zeitspanne aufgetreten ist, kann gewährleistet werden, wenn aus der ermittelten verteilten Dehnungsmessgröße in dem zumindest einen identifizierten Abschnitt die aktuelle Rissweite, insbesondere durch Integration der Dehnung über die Kabellänge des Glasfaserkabels, bestimmt wird und ausgehend von der aktuellen Rissweite die Rissweite des Modells angepasst wird, bis diejenige maximale Rissweite identifiziert wird, die demjenigen örtlichen Modell-Dehnungsmesswertverlauf zugeordnet ist, der am besten mit der ermittelten verteilten Dehnungsmessgröße im identifizierten Abschnitt, insbesondere deren Randbereichen, übereinstimmt.

Ein besonders einfacher Abgleich zwischen der für das Objekt wie z.B. ein Bauwerk ermittelten verteilten Dehnungsmessgröße und den Modell-Dehnungsmesswertverläufen kann erzielt werden, wenn für den Vergleich zwischen dem Modell-Dehnungsmesswertverlauf und der ermittelten verteilten Dehnungsmessgröße die Randbereiche der ermittelten verteilten Dehnungsmessgröße in dem zumindest einen identifizierten Abschnitt, insbesondere jeweils die Bereiche bis zum ersten lokalen Maximum, vorzugsweise dem Wendepunkt, herangezogen werden.

Bei einem erfindungsgemäßen Verfahren kann für einen besonders breiten und variablen Einsatz vorteilhafterweise vorgesehen sein, dass das Objekt ein Bodenkörper, ein Felskörper, ein Eiskörper, ein Bauwerk, ein Bauwerksteil, ein Fahrzeug, ein Fluggerät, ein Weltraumfluggerät, ein Schiff, ein Unterseeboot, eine Anlage oder ein Anlagenteil ist.

Aufgabe der Erfindung ist es weiters, eine Anordnung zur Detektion der maximalen Ausdehnung von Rissen in einem Objekt, insbesondere einem Bauwerk, bereitzustellen. Die Erfindung löst diese Aufgabe mit den Merkmalen von Anspruch 12. Erfindungsgemäß ist dabei vorgesehen, dass ein Glasfaserkabel in und/oder an dem Objekt, insbesondere dem Bauwerk, angeordnet ist, wobei das Glasfaserkabel von einem Hüllschichtaufbau derart umgeben ist, dass bei Überschreiten einer vorgegebenen Grenzkraft das Glasfaserkabel lokal in Längsrichtung relativ zum Hüllschichtaufbau verschoben wird, und dass eine Mess- und Verarbeitungseinheit an das Glasfaserkabel angekoppelt ist. Die Mess- und Verarbeitungseinheit ist dabei dazu ausgebildet, zu vorgegebenen Zeitpunkten jeweils optische Signale in den Glasfaserkern des Glasfaserkabels abzugeben und das reflektierte, zurückkehrende Signal entlang des Glasfaserkerns des Glasfaserkabels zu erfassen und einem räumlichen Ort entlang des Glasfaserkabels, insbesondere des Objekts, vorzugsweise des Bauwerks, zuzuordnen und ein erfindungsgemäßes Verfahren durchzuführen und derart die maximale Ausdehnung einzelner Risse zu ermitteln.

Eine derartige Anordnung ermöglicht es vorteilhafterweise, auf besonders einfache Weise die innerhalb der Zeitspanne aufgetretene maximale Rissweite eines jeweiligen Risses im Objekt, beispielsweise einem Bauwerk, abzuleiten, ohne dass dafür zeit- und arbeitsaufwändige Dauermessungen erforderlich sind.

Ein Programm zur Durchführung eines erfindungsgemäßen Verfahrens kann vorteilhafterweise auf einem Datenträger abgespeichert werden.

Erfindungsgemäß ermittelte Modell-Dehnungsmesswertverläufe und/oder Parameter können vorteilhafterweise ebenfalls auf einem Datenträger abgespeichert werden, um diese transportabel zu machen und ohne neuerliche Modellberechnungen nutzen zu können.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen dargestellt und wird unter Bezugnahme auf die Zeichnungen beispielhaft beschrieben.

Im Folgenden zeigen schematisch:
Fig. 1, Fig. 2a und Fig. 2b Beispiele für die Anordnung von einem Glasfaserkabel an ein Objekt, bei dem es sich konkret um ein Bauwerk handelt,
Fig. 3 eine schematische Darstellung eines erfindungsgemäßen Models zur Berechnung von Modell-Dehnungsmesswertverläufen,
Fig. 4 eine schematische Darstellung des nichtlinearen Federgesetzes,
Fig. 5 ein Beispiel eines Probekörpers mit darauf angeordnetem Glasfaserkabel und Hüllschichtaufbau,
Fig. 6 ein Ausführungsbeispiel mit Modell-Dehnungsmesswertverläufen und an einem Probenkörper ermittelten, verteilten Dehnungsmessgrößen bei Erstbelastung,
Fig. 7 Modell-Dehnungsmesswertverläufe und ermittelte, verteilte Dehnungsmessgrößen für das Ausführungsbeispiel aus Fig. 6 bei Entlastung,
Fig. 8 Modell-Dehnungsmesswertverläufe und verteilte Dehnungsmessgrößen für das Ausführungsbeispiel aus Fig. 6 bei Wiederbelastung,
Fig. 9 ein Ausführungsbeispiel der iterativen Anpassung der Parameter des mechanischen Modells,
Fig. 10 ein Ausführungsbeispiel für das Abgleichen eines an einem Objekt, konkret einem Bauwerk, ermittelten Verlaufs der verteilten Dehnungsmessgröße mit Modell-Dehnungsmesswertverläufen,
Fig. 11 eine Detailansicht des Randbereichs der ermittelten, verteilten Dehnungsmessgröße und Modell-Dehnungsmesswertverläufe aus Fig. 10.

Ausführungsbeispiele eines erfindungsgemäßen Verfahrens bzw. einer erfindungsgemäßen Vorrichtung zur Detektion der maximalen Ausdehnung von Rissen R in einem Objekt werden im Folgenden anhand von Ausführungsbeispielen im Zusammenhang mit Bauwerken B näher erläutert. Dabei wird im Zusammenhang mit der Erfindung unter einem Bauwerk eine Konstruktion verstanden, deren Herstellung in der Regel ein bautechnisches Wissen erfordert. Ein Bauwerk besteht aus Einzelbauteilen, welche tragende oder nichtragende Funktionen übernehmen. Beispiele sind Brückentragwerke, Tunnel oder Gebäude mit raumbildenden Funktionen.

Dabei handelt es sich jedoch nur um exemplarische Beispiele und ein erfindungsgemäßes Verfahren bzw. eine erfindungsgemäße Vorrichtung können ebenso zur Detektion der maximalen Ausdehnung von Rissen R in Objekten verschiedenster Art wie beispielsweise Felsen, Fahrzeugen, Rohrleitungen, oder Leitung und anderen Objekten aus verschiedensten Werkstoffen wie Metall angewendet werden.

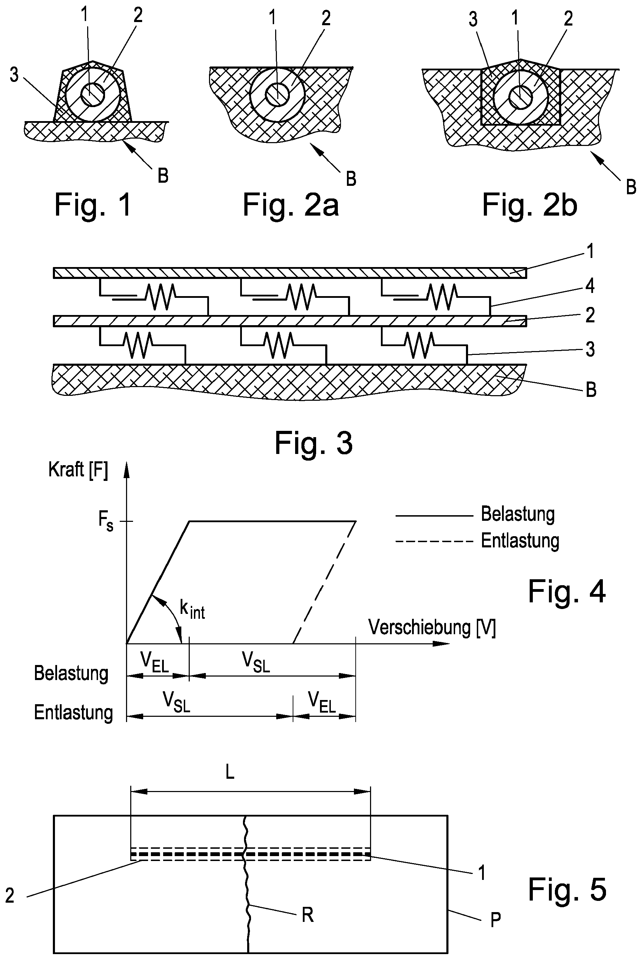

Sensorsysteme basierend auf verteilten, faseroptischen Messungen dienen zur Erfassung von Dehnungen mittels eines kontinuierlich am Messobjekt, beispielsweise einem Bauwerk B, angeordneten Sensorkabels. Fig. 1, 2a und 2b zeigen derartige Sensorkabel, die ein Glasfaserkabel 1 und einen Hüllschichtaufbau 2 umfassen. Das Glasfaserkabel 1 ist dabei vom Hüllschichtaufbau 2 derart umgeben, dass bei Überschreiten einer Grenzkraft F_{S}, bei der es sich um eine Materialeigenschaft handelt und die beispielsweise eine Reibungskraft sein kann, das Glasfaserkabel 1 lokal in Längsrichtung relativ zum Hüllschichtaufbau 2 bleibend verschoben wird.

Monitoringsysteme basierend auf verteilten, faseroptischen Messungen bieten den Vorteil, dass ein Riss-Monitoring an bereits bestehenden Objekten bzw. Bauwerken B, wie beispielsweise unbewehrten Betontunnelinnenschalen, durchgeführt werden kann, da das Glasfaserkabel 1 mit dem Hüllschichtaufbau 2 nachträglich an der Oberfläche des Bauwerks B angeordnet werden kann. Um in diesem Fall eine vollständige Übertragung der auftretenden Dehnungen ε des Bauwerks B an das Glasfaserkabel 1 und den Hüllschichtaufbau 2 sicherzustellen, kann der Hüllschichtaufbau 2 nachträglich mit einem Verbindungsmittel 3, wie beispielsweise adhäsiven Klebstoffen oder Spezialmörtel, an der Oberfläche des Bauwerks B angeordnet, d.h. beispielsweise festgeklebt, werden, wie dies in Fig. 1 schematisch dargestellt ist.

Alternativ dazu kann das Glasfaserkabel 1 mit dem Hüllschichtaufbau 2 direkt im Bauwerk B eingebettet, z.B. einbetoniert, werden, wie dies in Fig. 2a dargestellt ist. Des Weiteren kann alternativ dazu das vom Hüllschichtaufbau 2 umgebene Glasfaserkabel 1 auch in einer Nut im Bauwerk B angeordnet und dort beispielsweise mit adhäsivem Klebstoff oder Spezialmörtel eingeklebt werden, wie dies in Fig. 2b schematisch dargestellt ist.

Wie bereits zuvor erwähnt, ist das Glasfaserkabel 1 derart vom Hüllschichtaufbau 2 umgeben, dass bei Überschreiten einer vorgegebenen Grenzkraft F_{S} das Glasfaserkabel 1 lokal in Längsrichtung relativ zum Hüllschichtaufbau 2 verschoben wird. Ist an einem Bauwerk B ein derartiges Glasfaserkabel 1, umgeben von einem Hüllschichtaufbau 2, angeordnet, so kann dieser Umstand für verteilte faseroptische Messungen und in weiterer Folge zur Detektion der maximalen Aufdehnung von Rissen R in dem Bauwerk B innerhalb einer Zeitspanne verwendet werden.

Allgemeine Grundlagen der verteilten faseroptischen Messungen sind z.B in Soga, Kenichi; Kwan, Vivien; Pelecanos, Loizos; Rui, Yi; Schwamb, Tina; Seo, Hyungjoon; Wilcock, Matthew. The Role of Distributed Sensing in Understanding the Engineering Performance of Geotechnical Structures. Paper presented at XVI European Conference on Soil Mechanics and Geotechnical Engineering, Edinburgh, UK United Kingdom. 10.1680/ecsmge.60678.vol1.002, zuletzt aufgerufen am 16. Juli 2019, beschrieben:
Verteilte faseroptische Messungen nutzen die Tatsache, dass optische Glasfasern empfindlich auf Umgebungsparameter wie z.B. Temperatur, Dehnung, Deformation, Vibration, akustische Einflüsse, etc. reagieren. Diese Umgebungsparameter beeinflussen die Eigenschaften von eingekoppelten optischen Signalen, die sich durch die jeweilige Glasfaser ausbreiten. Wenn sich Licht durch ein transparentes Medium wie z.B. Glas ausbreitet, wird der Großteil des Lichts durchgelassen, während ein geringer Anteil rückgestreut wird. Rückstreuung tritt in diesem Zusammenhang durch Inhomogenität in der Struktur des Glasfaserkerns auf. Das rückgestreute Licht kann sich in sämtliche Richtungen, das heißt auch entgegengesetzt zur Einkoppelungsrichtung, ausbreiten, was als "Backscattered Light" bezeichnet wird.

Im Stand der Technik werden drei Hauptstreuungsprozesse genutzt, nämlich Rayleigh Scattering, Brillouin Scattering und Raman Scattering. Rayleigh Scattering führt zu einer Rückstreuung von Licht mit derselben Frequenz, die das einfallende Licht aufweist, und kann dazu verwendet werden, die Dämpfung oder den Verlust des Lichtsignals entlang der Länge des Glasfaserkabels zu beobachten. Durch Analyse der zufälligen, aber statischen Amplitude des Dämpfungssignals können z.B. mit einem OFDR Instrument, Informationen hinsichtlich der Dehnung und/oder der Temperatur im Verhältnis zu einer zuvor durchgeführten Referenzmessung abgeleitet werden. Licht, das durch Brillouin Scattering rückgestreut wird, ist temperatur- und deformationsabhängig, und die Frequenzverschiebung des Brillouin-Spektrums variiert mit longitudinaler Deformation und Temperatur im Glasfaserkabel. Raman Scattering ist mit temperaturabhängigen Spektren verbunden.

Im Zuge einer faseroptischen Messung werden die Scattering Signale registriert und für eine weitere Verarbeitung herangezogen. Techniken, die auf Brillouin Scattering basieren, wie beispielsweise Time-Domain-Techniken wie die Brillouin Optical Time Domain Reflectometry (BOTDR) oder die Brillouin Optical Time Domain Analysis (BOTDA), werden im Stand der Technik für verteilte Deformationsmessungen, d.h. für die Ermittlung einer Verteilung der durch Risse R in einem Objekt bedingten Dehnungswerte ε über die Kabellänge L eines Glasfaserkabels 1 herangezogen. In dieser Hinsicht wird Bezug genommen auf Abschnitt 2.2 "Principles of distributed strain sensing" des wissenschaftlichen Artikels Soga, Kenichi; Kwan, Vivien; Pelecanos, Loizos; Rui, Yi; Schwamb, Tina; Seo, Hyungjoon; Wilcock, Matthew. The Role of Distributed Sensing in Understanding the Engineering Performance of Geotechnical Structures. Paper presented at XVI European Conference on Soil Mechanics and Geotechnical Engineering, Edinburgh, UK United Kingdom. 10.1680/ecsmge.60678.voI1.002, zuletzt aufgerufen am 16. Juli 2019, dessen Inhalt hiermit in diese Anmeldung aufgenommen wird.

Wird beispielsweise Licht mit einer Wellenlänge von 1550 nm in das Glasfaserkabel eingekoppelt, tritt Scattering auf und das Brillouin-Spektrum des rückgestreuten bzw. backscattered Lichts hat eine Bandbreite von 25 bis 30 MHz mit einer zentralen Peak-Frequenz von etwa 11 GHz für Standard-Singlemode-Glasfaserkabel, wenn keine Deformation auftritt. Die zentrale Peak-Frequenz ist dabei abhängig vom einfallenden Licht, dem Refraktionsindex des Glasfaserkabels, der Schallgeschwindigkeit im Kabel und der Wellenlänge des einfallenden Lichts.

Temperaturveränderungen und/oder deformationsbedingte Dichteveränderungen im Glasfaserkabel beeinflussen die Schallgeschwindigkeit und den Refraktionsindex. Wenn die Deformation oder Temperatur an einer vorgegebenen Lokation im Glasfaserkabel eine Veränderung erfahren, wird die Frequenz des rückgestrahlten Lichts linear proportional zur vorherrschenden Temperatur oder Dehnung verschoben. Bei einer Wellenlänge des einfallenden Lichts von beispielsweise 1550 nm beträgt der Brillouin-Frequenz-Shift von 9 GHz bis 13 GHz. Dies bedeutet, dass ein Monitoring des Frequenz-Shifts des Brillouin-Spektrums Informationen über Deformation und Temperaturveränderungen an der Lokation, wo das Licht rückgestreut wird, liefert. Da die Lichtgeschwindigkeit im Glasfaserkabel konstant ist, kann die Lokation durch eine Messung der Zeit, die zwischen dem Einspeisezeitpunkt des Lichts ins Glasfaserkabel und der Registrierung des rückgestrahlten Lichts vergeht, bestimmt werden. Werden sowohl Zeit als auch Frequenz ermittelt, ist es möglich, ein kontinuierliches Deformations- oder Temperaturveränderungsprofil entlang der Länge des Glasfaserkabels für Entfernungen bis zu einigen Kilometern zu erstellen. Weitere Grundlagen zur Verwertung des Brillouin Scattering sind ebenfalls beschrieben in Soga, Kenichi; et al., 10.1680/ecsmge.60678.voI1.002, zuletzt aufgerufen am 16. Juli 2019.

Rayleigh Scattering in Glasfaserkabeln wird durch Veränderungen des Refraktionsindex entlang der Länge des Glasfaserkabels hervorgerufen. Für eine jeweilige Glasfaser ist die Scatter-Amplitude als Funktion der Distanz eine zufällige, aber statische Eigenschaft der Glasfaser und kann als kontinuierliches, schwaches Bragg-Grating mit einer zufälligen Periode moduliert werden. Veränderungen im lokalen Abstand zwischen Scattering auslösenden Diskontinuitäten bedingt durch externe Stimuli wie Deformation oder Temperaturveränderungen bedingen eine Verschiebung des lokalen Reflexionsspektrums. Die lokalen, spektralen Verschiebungen können dann kalibriert und in Form einer verteilten Deformationsmessung, d.h. der Ermittlung einer Verteilung der durch Risse R in einem Objekt bedingten Dehnungswerte ε über die Kabellänge L des Glasfaserkabels 1, oder einer verteilten Temperaturmessung zusammengesetzt werden. In dieser Hinsicht wird Bezug genommen auf die Seiten 2 bis 7, jeweils erster bis letzter Absatz, des wissenschaftlichen Artikels Kreger, Stephen T.; Sang, Alex K.; Gifford, Dawn K.; Froggatt, Mark E.; 2009; Distributed strain and temperature sensing in plastic optical fiber using Rayleigh scatter, Proc. SPIE 7316, Fiber Optic Sensors and Applications VI, 73160A (27 April 2009); doi: 10.1117/12.821353, zuletzt aufgerufen am 16. Juli 2019, deren Inhalt hiermit in diese Anmeldung aufgenommen wird. Darin sind Messmethode, Kalibrierung und Auswertung beschrieben.

Im Folgenden wird ein Ausführungsbeispiel eines erfindungsgemäßen Verfahrens zur Detektion der maximalen Ausdehnung von Rissen R in einem Objekt, konkret einem Bauwerk B, innerhalb einer Zeitspanne beschrieben. An dem Bauwerk B ist, wie zuvor beschrieben, ein Glasfaserkabel 1 mit einem Hüllschichtaufbau 2 angeordnet. Am Beginn der interessierenden Zeitpanne wird eine verteilte faseroptische Referenzmessung im Glasfaserkabel 1 vorgenommen und das dabei ermittelte Messergebnis als Referenzmessergebnis zur Verfügung gehalten. Am Ende der interessierenden Zeitspanne wird eine verteile faseroptische Folgemessung im selben Glasfaserkabel 1 durchgeführt und basierend auf den Unterschieden zwischen der Referenzmessung und der Folgemessung eine Verteilung der durch Risse R im Bauwerk B bedingten Dehnungswerte ε über die Kabellänge L des Glasfaserkabels 1 ermittelt.

Zur Ermittlung der Dehnungswerte ε anhand der verteilten faseroptischen Messungen kommen aus dem Stand der Technik bekannte Verfahren zum Einsatz, wie beispielsweise die zuvor erwähnten Analysen von Brillouin Scattering oder Rayleigh Scattering.

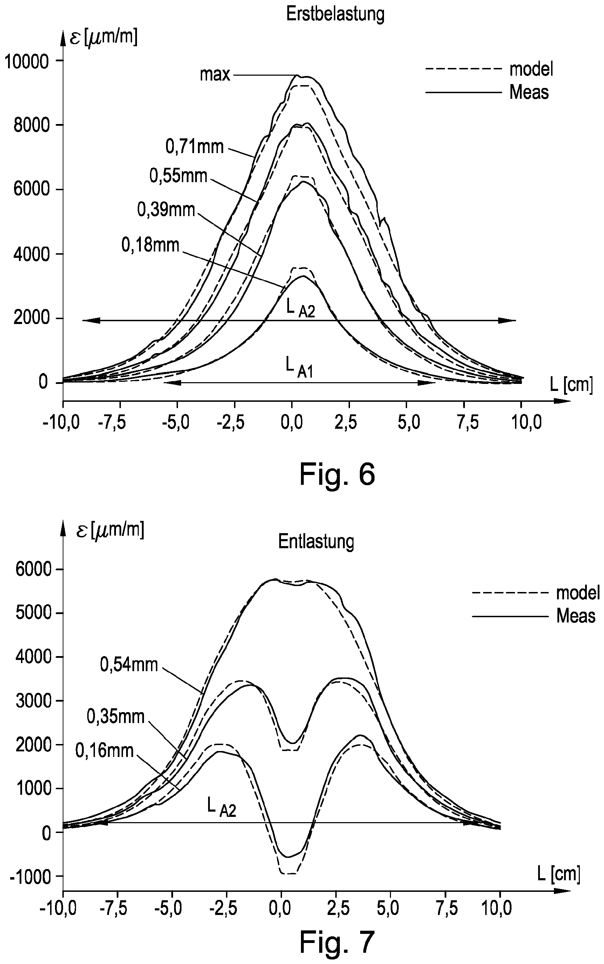

Um nun die maximale, innerhalb der Zeitspanne aufgetretene Rissweite wₘₐₓ ermitteln zu können, wird erfindungsgemäß ein Modell vorgegeben, das für eine Anzahl von maximalen Rissweiten wₘₐₓ jeweils zumindest einen örtlichen Modell-Dehnungsmesswertverlauf aufweist. Dieser Modell-Dehnungsmesswertverlauf beschreibt jeweils die lokale Dehnung ε des Glasfaserkabels 1 über einen Teil der Kabellänge L des Glasfaserkabels 1 im Bereich eines Risses R mit der jeweiligen maximalen Rissweite wₘₐₓ. In den Fig. 6-11 ist der Verlauf der Dehnung ε [µm/m] über die Kabellänge L [cm] dargestellt und die Modell-Dehnungsmesswertverläufe sind als strichlierte Linien, die mit der Bezeichnung "model" gekennzeichnet sind, ersichtlich.

Für die diesbezügliche Auswertung wird erfindungsgemäß zunächst zumindest ein Abschnitt innerhalb der gemessenen verteilten Dehnungsmessgröße identifiziert, in dem die Dehnungswerte einen vorgegeben Schwellenwert überschreiten. In den Fig. 6-11 sind die gemessenen Verläufe der verteilten Dehnungsmessgröße als durchgezogene Linien, die mit der Bezeichnung "Meas" gekennzeichnet sind, dargestellt.

Anschließend werden die ermittelte verteilte Dehnungsmessgröße in dem zumindest einen identifizierten Abschnitt und die Modell-Dehnungsmesswertverläufe des Modells in Übereinstimmung gebracht und es wird derart nach derjenigen maximalen Rissweite wₘₐₓ gesucht, die demjenigen örtlichen Modell-Dehnungsmesswertverlauf zugeordnet ist, der am besten mit der ermittelten verteilten Dehnungsmessgröße im identifizierten Abschnitt übereinstimmt. Diese maximale Rissweite wₘₐₓ wird schließlich als Messgröße für die maximale Rissweite wₘₐₓ des jeweiligen tatsächlichen Risses R, die innerhalb der interessierenden Zeitspanne im Bauwerk B aufgetreten ist, angesehen.

Das vorgegebene Modell kann optional für jede maximale Rissweite wₘₐₓ eine Vielzahl von örtlichen Modell-Dehnungsmesswertverläufen über einen Teil der Kabellänge L des jeweiligen Glasfaserkabels 1 umfassen. In diesem Fall entspricht jeder dieser örtlichen Modell-Dehnungsmesswertverläufe einem Dehnungsmesswertverlauf, der sich ausgehend von der jeweiligen maximalen Rissweite wₘₐₓ bei einer maximalen Belastung durch Entlastung des Bauwerks B bzw. Glasfaserkabels 1 ergibt. Wird das Bauwerk B entlastet, nachdem die maximale Rissweite wₘₐₓ erreicht wurde, verringert sich die aktuelle Rissweite wₐₖₜᵤₑₗₗ im Lauf der Zeit, wobei jeweils ein Schlupf V_{SL} zwischen dem Glasfaserkabel 1 und dem Hüllschichtaufbau 2 als bleibende Verschiebung bzw. Restverschiebung zurückbleibt.

Das Modell kann optional auch Modell-Dehnungsmesswertverläufe für eine spezielle Kombination von Baustoff, Glasfaserkabel 1 und Hüllschichtaufbau 2 oder auch für eine Vielzahl vorgegebener Kombinationen von Baustoff, Glasfaserkabel 1 und Hüllschichtaufbau 2 bei einer jeweiligen maximalen Rissweite wₘₐₓ umfassen. Da der Schlupf bzw. die bleibende Verschiebung je nach Kombination von Baustoff, Glasfaserkabel 1 und Hüllschichtaufbau 2 variieren kann, ist es besonders vorteilhaft, wenn das Modell Modell-Dehnungsmesswertverläufe für verschiedenste derartige Kombination umfasst.

Beim vorgegebenen Modell kann es sich beispielsweise um ein mechanisches Modell handeln, das durch eine Mehrzahl an vorgebbaren Parametern definiert ist. Die vorgebbaren Parameter können dabei z.B. anhand von Materialversuchen an den Einzelkomponenten Baustoff, Glasfaserkabel 1 und Hüllschichtaufbau 2 ermittelt bzw. kalibriert werden und anschließend können Modell-Dehnungsmesswertverläufe ausgehend von einer jeweiligen maximalen Rissweite wₘₐₓ und einer maximalen Belastung bei Entlastung modelliert bzw. berechnet werden.

Alternativ dazu kann das vorgegebene Modell auch empirisch ermittelt werden. Dazu werden anhand von Referenzversuchen an beispielsweise zumindest einem Probekörper P, an dem ein Glasfaserkabel 1 umgeben von einem Hüllschichtaufbau 2 angeordnet ist, eine Vielzahl von Modell-Dehnungsmesswertverläufen gemessen. Dazu wird der Probekörper P beispielsweise stufenweise belastet, bis sich ein Riss R mit einer jeweiligen maximalen Rissweite wₘₐₓ einstellt und anschließend stufenweise entlastet. Während der Entlastung des Probekörpers P können so Modell-Dehnungsmesswertverläufen gemessen werden, bei denen sich die tatsächliche Rissweite wₐₖₜᵤₑₗₗ im Lauf der Zeit verringert und jeweils ein Schlupf V_{SL} zwischen dem Glasfaserkabel 1 und dem Hüllschichtaufbau 2 als bleibende Verschiebung zurückbleibt.

In Fig. 3 ist eine schematische Darstellung einer Kombination aus unterschiedlichen mechanischen Elementen dargestellt. Diese bilden im Ausführungsbeispiel die Grundlage für ein mechanisches Modell, das durch Vorgabe der jeweiligen Materialparameter bestimmt ist und für die Bestimmung von Modell-Dehnungsmesswertverläufen über die Kabellänge L des Glasfaserkabels 1 herangezogen wird.

Wie in Fig. 3 zu erkennen ist, wird das Glasfaserkabel 1 durch ein erstes Stabelement mit einer linear elastischen Dehnsteifigkeit D₁ angegeben. Die Dehnsteifigkeit D₁ bestimmt sich dabei als das Produkt des Elastizitätsmoduls E_{F} und der Querschnittsfläche A_{F} des Glasfaserkabels 1. Der Hüllschichtaufbau 2 wird im Modell durch ein zweites Stabelement mit einer linear elastischen Dehnsteifigkeit D₂ angegeben, wobei die Dehnsteifigkeit D₂ das Produkt des Elastizitätsmoduls E_{S} und der Querschnittsfläche A_{S} des Hüllschichtaufbaus 2 ist.

Die Interaktion zwischen dem Glasfaserkabel 1 und dem Hüllschichtaufbau 2 wird in Form eines Interaktionselements 4 angegeben. Dabei handelt es sich um ein nicht lineares, beispielsweise elasto-plastisches Federelement mit einer Grenzkraft F_{S} und Steifigkeit kᵢₙₜ. Bei Überschreiten der Grenzkraft F_{S} tritt ein Schlupf V_{SL} als bleibende Verschiebung des Glasfaserkabels 1 gegenüber dem Hüllschichtaufbau 2 auf. Bei einer, die Grenzkraft F_{S} überschreitenden, Belastung tritt somit eine maximale Verschiebung auf, die sich aus einer reversiblen, elastischen Verschiebung V_{EL} und einem Schlupf V_{SL}, d.h. einer bleibenden Verschiebung, zusammensetzt. Dies bedeutet, dass das Interaktionselement 4 mit ausgeprägter plastischer Verformungskapazität bei Erreichen bzw. Überschreiten der Kraft F_{S} modelliert wird. Die bleibende Verschiebung bzw. der bleibende Schlupf V_{SL} bei Überschreiten der Grenzkraft F_{S} stehen in direktem Zusammenhang mit der jeweils auftretenden maximalen Messgröße und somit auch mit der maximalen Rissweite wₘₐₓ innerhalb des interessierenden Zeitraums.

Die wichtigsten Parameter des mechanischen Modells sind in Fig. 4 anhand einer schematischen Darstellung des nicht linearen Federgesetzes dargestellt. Es wird beispielsweise ein ideal plastisches Gesetz verwendet, welches sich bis zur Grenzkraft F_{S} direkt proportional mit der Steifigkeit kᵢₙₜ zum Verschiebeweg V gemäß dem Hook' schen Gesetz verhält. Bei Erreichen der Grenzkraft F_{S} wird zudem die maximal mögliche elastische, d.h. rückstellbare, Verformung bzw. Verschiebung V_{EI} erreicht. Bei einer größeren Verschiebung ist über die Grenzkraft F_{S} hinaus keine weitere Kraftzunahme mehr möglich und es bildet sich ein Fließplateau mit bleibendem Schlupf V_{SL} nach Entlastung, in Fig. 4 dargestellt als strichlierte Linie, aus.

Das Zusammenwirken dieser mechanischen Elemente kann anhand mathematischer Gleichungen beschrieben und derart können Modell-Dehnungsmesswertverläufe berechnet werden oder die Modell-Dehnungsmesswertverläufe können auch computergestützt mit Hilfe von Modellierungs-Software, wie beispielsweise Solver basierend auf Finite Elemente Methoden wie beispielsweise Ansys Mechanical, modelliert werden.

Das zuvor erwähnte erste und ein zweites Stabelement sowie das nicht lineare Federelement reichen aus, um Modell-Dehnungsmesswertverläufe für ein Glasfaserkabel 1 und einen Hüllschichtaufbau 2 zu ermitteln, wenn diese im Bauwerk B fix integriert, beispielsweise, eingegossen sind. Sind diese mit Hilfe eines Verbindungsmittels am Bauwerk B angeordnet, kann zusätzlich ein lineares, die Anbindung des Hüllschichtaufbaus 2 an das Bauwerk B repräsentierendes Federelement mit einer Federsteifigkeit k bei der Berechnung bzw. Modellierung der Modell-Dehnungsmesswertverläufe berücksichtigt werden.

Die im Modell verwendeten Parameter des Glasfaserkabels 1, des Hüllschichtaufbaus 2 und des Interaktionselements 4 oder gegebenenfalls auch der Anbindung des Hüllschichtaufbaus 2 an das Bauwerk B können anhand von Referenzversuchen angepasst werden, um Modell-Dehnungsmesswertverläufe zu erhalten, die möglichst exakt der Realität entsprechen.

Dazu kann beispielsweise, wie in Fig. 5 dargestellt, eine Referenzversuchsreihe an einem Probekörper P durchgeführt werden. Dabei handelt es sich beispielsweise um einen Probekörper P, der aus einem bestimmten Baustoff hergestellt ist, der dem des Bauwerks B, das untersucht werden soll, entspricht. An dem Probekörper P wird ein Glasfaserkabel 1 der Länge L mit einem Hüllschichtaufbau 2 angeordnet, die dem Glasfaserkabel 1 und dem Hüllschichtaufbau 2 entsprechen, die am zu untersuchenden Bauwerk B angeordnet sind. Die Art und Weise der Anordnung, d.h. ob das Glasfaserkabel 1 und der Hüllschichtaufbau 2 eingebettet oder mit dem Bauwerk B verklebt werden, kann ebenfalls entsprechend am Probekörper P umgesetzt werden.

Zunächst wird eine verteilte faseroptische Versuchs-Referenzmessung im Glasfaserkabel 1 vor dem eigentlichen Versuch vorgenommen. Anschließend wird der Probenkörper P stufenweise belastet, beispielsweise durch Drei- oder Vierpunkt-Biegezugversuche, bis sich ein Riss R ausbildet. Der Probekörper P wird dabei so lange belastet, bis die maximale Rissweite des Risses R, beispielsweise den typischen, bei bestimmten Bedingungen in Bauwerken B auftretenden, maximalen Rissweiten wₘₐₓ, entspricht. Während der Belastung wird die Grenzkraft F_{S} überschritten und bei der maximalen Rissweite wₘₐₓ tritt ein bleibender Schlupf V_{SL} des Glasfaserkabels 1 gegenüber dem Hüllschichtaufbau 2 auf.

Während der verschiedenen Belastungsstufen werden jeweils verteilte faseroptische Versuchs-Folgemessungen im Glasfaserkabel 1 durchgeführt. Basierend auf den Unterschieden zwischen der Versuchs-Referenzmessung und den -Folgemessungen werden Verteilungen der durch den Riss R im Probekörper P bedingten Dehnungswerte ε über die Kabellänge L ermittelt.

Im Ausführungsbeispiel in Fig. 6 sind dabei vier Verläufe der Dehnungswerte ε für Belastungsstufen mit Rissweiten wₐₖₜᵤₑₗₗ von 0,18, 0,39, 0,55, und 0,71 mm dargestellt. In den Fig. 6 bis 9 ist jeweils ein Abschnitt des Glasfaserkabels 1 mit einer Betrachtungslänge von 20 cm Länge dargestellt, wobei der Ursprung in der Darstellung den Ort, an dem der Riss R entstanden ist, angibt. Die durchgehenden Linien, gekennzeichnet mit der Bezeichnung "Meas", geben dabei die aus Messungen am Probekörper P ermittelten Verteilungen der Dehnungswerte ε über die Kabellänge L an. Bei einer Rissweite wₐₖₜᵤₑₗₗ von 0,18 mm beträgt die aktivierte Länge L_{A1} des Glasfaserkabels 1 ca. 110 mm. Unter "aktivierter Länge" L_{A} des Glasfaserkabels 1 ist im Zusammenhang mit der Erfindung jener Längenabschnitt des Glasfaserkabels 1 zu verstehen, der bei Belastung messbar gedehnt wird.

Hier wird noch kein Schlupf V_{SL} als bleibende Relativverschiebung aktiviert, da die Grenzkraft F_{S} noch nicht überschritten wurde und somit nur eine reversible, elastische Verformung V_{EL} des Glasfaserkabels 1 stattfindet. Mit steigender Belastung und zunehmender Rissweite nimmt auch die aktivierte Länge L_{A} weiter zu. Bei beispielsweise einer maximalen Rissweite von 0,71 mm, die im Ausführungsbeispiel die maximale Rissweite wₘₐₓ darstellt, treten eine maximale aktivierte Länge von L_{A2}=180 mm und jedenfalls eine bleibende Relativverschiebung bzw. ein Schlupf V_{SL} des Glasfaserkabels 1 gegenüber dem Hüllschichtaufbau 2 auf, da die Grenzkraft F_{S} bei der Belastung überschritten wurde.

Anschließend wird der Probekörper P stufenweise entlastet, wobei sich der im Probekörper P entstandene Riss R zumindest teilweise wieder schließt. Dabei bleibt eine Restverschiebung bzw. ein Schlupf V_{SL} zwischen dem Glasfaserkabel 1 und dem Hüllschichtaufbau 2 zurück. Während der Entlastung werden ebenfalls verteilte faseroptische Versuchs-Folgemessungen im Glasfaserkabel 1 durchgeführt. Basierend auf den Unterschieden zur Versuchs-Referenzmessung werden ebenfalls Verteilungen der durch den Riss R im Probekörper P bedingten Dehnungswerte ε über die Kabellänge L ermittelt. Die durchgehenden Linien, gekennzeichnet mit der Bezeichnung "Meas", in Fig. 7 geben wieder die aus den Messungen am Probekörper P abgeleiteten Verteilungen der Dehnungswerte ε über die Kabellänge L an.

Wie in Fig. 7 zu erkennen ist, bleibt bei der maximalen Rissweite wₘₐₓ von 0,71 mm, die in Fig. 6 erreicht wurde, ein Schlupf V_{SL} bzw. eine bleibende Verschiebung erhalten, auch wenn sich der Riss R während der Entlastung teilweise schließt. Die Verläufe der Dehnungswerte ε über die Kabellänge L weisen bei Entlastung charakteristische Bäuche auf, die umso stärker ausgeprägt sind, je weiter der Riss R sich geschlossen hat.

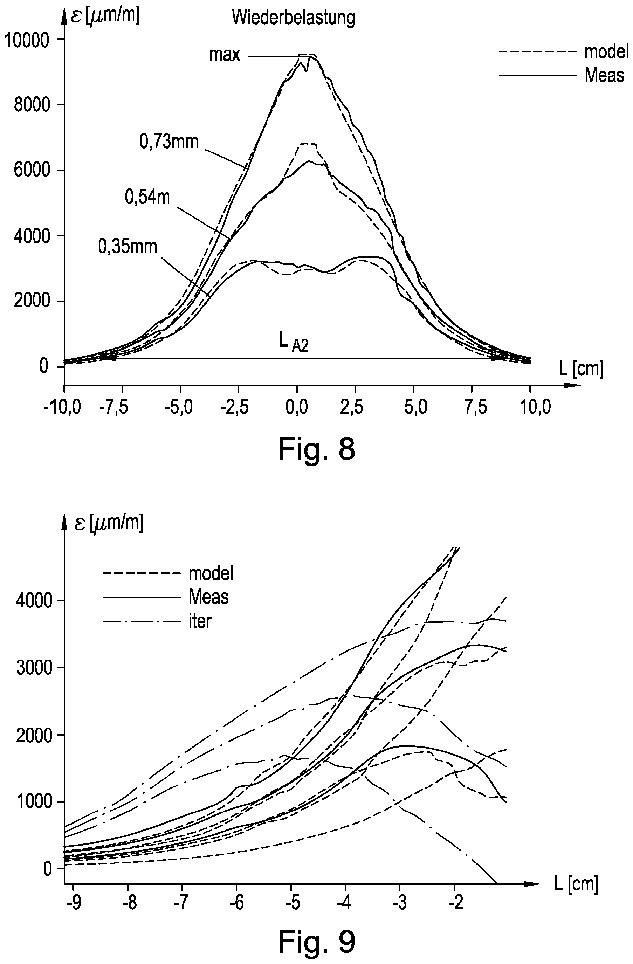

Optional kann, wie in Fig. 8 dargestellt, auch eine Wiederbelastung des Probekörpers P bis zur Maximallast vorgenommen werden, wobei wieder die maximale aktivierte Länge L_{A2} auftritt, die bei der maximalen Rissweite wₘₐₓ zuvor bereits aufgetreten ist. Wird der Probekörper P darüber hinaus weiter belastet, nimmt die aktivierte Länge und die bleibende Verschiebung des Glasfaserkabels 1 gegenüber dem Hüllschichtaufbau 2 weiter zu.

Während der Wiederbelastung können ebenso verteilte faseroptische Versuchs-Folgemessungen durchgeführt werden, sodass basierend auf den Unterschieden zur Versuchs-Referenzmessung ebenfalls Verteilungen der durch den Riss im Probekörper P bedingten Dehnungswerte ε über die Kabellänge L ermittelt werden. Die durchgehenden Linien, gekennzeichnet mit der Bezeichnung "Meas", in Fig. 8 geben wie zuvor die aus den Messungen am Probekörper P abgeleiteten Verteilungen der Dehnungswerte ε über die Kabellänge L an. Wie in Fig. 8 ersichtlich ist, wurde der Probekörper P wieder belastet, sodass sich Rissweiten wₐₖₜᵤₑₗₗ von 0,35, 0,54 und 0,73 mm eingestellt haben, wobei die charakteristischen Bäuche in der Verteilung der Dehnungsmesswerte ε mit steigender Rissweite wₐₖₜᵤₑₗₗ abnehmen.

Ist diese Referenzversuchsreihe durchgeführt, können die im Modell verwendeten Parameter anhand der Referenzversuche angepasst werden. Dazu werden anhand des vorgegebenen Modells und für die jeweilige Kombination von Baustoff, Glasfaserkabel 1 und Hüllschichtaufbau 2 für zumindest eine oder mehrere im Versuch gemessene, maximale Rissweiten wₘₐₓ Modell-Dehnungsmesswertverläufe mit für das jeweilige Material typischen Startwerten für die Parameter berechnet.

Anschließend werden die berechneten Modell-Dehnungsmesswertverläufe mit den am Probekörper P gemessenen Verläufen der Dehnungswerte ε über die Kabellänge L bei der jeweiligen maximalen Rissweite wₘₐₓ in Übereinstimmung gebracht. Die berechneten bzw. modellierten, mit der Bezeichnung "model" gekennzeichneten, Modell-Dehnungsmesswertverläufe sind in den Fig. 6 bis 8 als strichlierte Linien dargestellt. Dabei werden die Parameter des Modells so lange angepasst, bis die Übereinstimmung der Modell-Dehnungsmesswertverläufe mit den gemessenen Verläufen optimal ist. Dazu kann ein Optimierungsverfahren angewendet werden, bis eine vorgegebene Übereinstimmung der Modell-Dehnungsmesswertverläufe und der gemessenen Verläufe, im Ausführungsbeispiel unter Anwendung der Methode der kleinsten Quadrate, festgestellt wird. Die Genauigkeit des Modells bzw. der Parameter des Modells steigt mit der Anzahl an zur Verfügung stehenden Referenzmessungen.

Vorzugsweise werden für den Abgleich der berechneten und gemessenen Verläufe die Randbereiche der ermittelten verteilten Dehnungsmessgröße und des Modell-Dehnungsmesswertverlaufs, beispielsweise die Bereiche bis zum ersten lokalen Maximum, d.h. beispielsweise dem Wendepunkt, herangezogen, wie dies in Fig. 9 im Detail dargestellt ist. Die Randbereiche der Verläufe sind für den Abgleich besonders gut geeignet, da beispielsweise im Zentrum der Verläufe Variationen auftreten, die eventuell durch zusätzliche Faktoren, wie z.B. Lösen der Kleberverbindung direkt an der Risskante, oder eine nicht nachvollziehbare Belastungsgeschichte, bedingt sind, während an den Rändern der Verlauf der Kurven ausschließlich durch die Verschiebung des Glasfaserkabels 1 gegenüber dem Hüllschichtaufbau 2 bedingt ist.

Ein Beispiel des Abgleichs des Modell-Dehnungsmesswertverläufe und der am Probekörper P ermittelten Verläufe der Dehnungswerte in deren jeweiligen Randbereichen, ist im Detail in Fig. 9 dargestellt. Die Modell-Dehnungsmesswertverläufe, sind in Fig. 9 als strichlierte, mit der Bezeichnung "model" gekennzeichnete, Linien dargestellt, während die aus den Messungen am Probekörper P abgeleiteten Verteilungen der Dehnungswerte ε über die Kabellänge L als durchgehende, mit der Bezeichnung "Meas" gekennzeichnete, Linien dargestellt sind. Die strichpunktierten Linien mit der Bezeichnung "iter" zeigen Iterationen bzw. Zwischenergebnisse der Anpassung der Modell-Dehnungsmesswertverläufe.

Steht nun ein, beispielsweise auf die zuvor beschriebene Weise erstelltes, Modell zur Verfügung, kann die maximale, innerhalb einer Zeitspanne aufgetretene, Rissweite wₘₐₓ für ein beliebiges Bauwerk B anhand von verteilten faseroptischen Messungen abgeleitet werden. Dazu kann eine erfindungsgemäße Anordnung zum Einsatz kommen, umfassend ein an dem zu untersuchenden Bauwerk B angeordnetes Glasfaserkabel 1 mit einem Hüllschichtaufbau 2 und eine Verarbeitungseinheit, die an das Glasfaserkabel 1 angekoppelt ist. Zu vorgegebenen Zeitpunkten gibt die Verarbeitungseinheit jeweils Lichtimpulse in das Glasfaserkabel 1 ab und misst das aus dem Glasfaserkabel 1 zurückkehrende, rückgestreute Licht und ermittelt mittels eines erfindungsgemäßen Verfahrens die maximal aufgetretene Rissweite wₘₐₓ innerhalb der Zeitspanne.

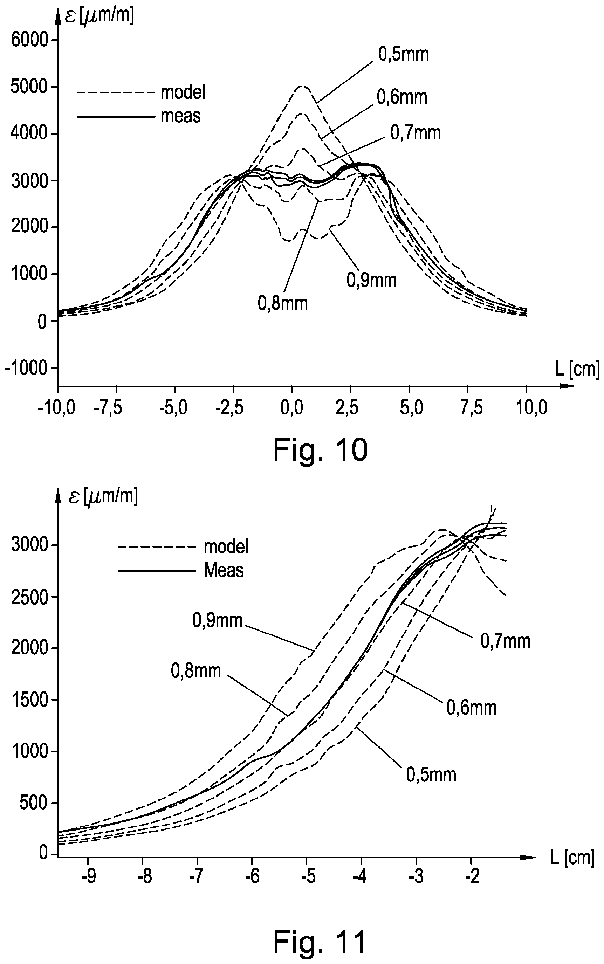

Ein Ausführungsbeispiel für die Ermittlung der maximalen Ausdehnung bzw. Rissweite wₘₐₓ von Rissen R in einem Bauwerk B innerhalb einer Zeitspanne wird im Folgenden anhand der Fig. 10 und der Detailansicht in Fig. 11 beschrieben.

Wie zuvor bereits erwähnt, wird für Untersuchungen der maximal aufgetretenen Rissweite wₘₐₓ in einem Bauwerk B, an bzw. in dem ein von einem Hüllschichtaufbau 2 umgebenes Glasfaserkabel 1 angeordnet ist, am Beginn der interessierenden Zeitspanne eine verteilte faseroptische Referenzmessung im Glasfaserkabel 1 vorgenommen. Am Ende der interessierenden Zeitspanne erfolgt eine verteilte faseroptische Folgemessung im selben Glasfaserkabel 1 und basierend auf den Unterschieden zwischen der Referenzmessung und der verteilten faseroptischen Folgemessung wird nach einem aus dem Stand der Technik bekannten Verfahren eine Verteilung der durch Risse R im Bauwerk B bedingten Dehnungswerte ε über die Kabellänge L des Glasfaserkabels 1 ermittelt.

In den aus den verteilen faseroptischen Messungen ermittelten Verteilungen der Dehnungswerte ε über die Kabellänge L wird jeweils zumindest ein Abschnitt identifiziert, in dem die Dehnungswerte ε einen vorgegebenen Schwellenwert überschreiten. Dieser Schwellenwert ist so gewählt, dass etwaiges Hintergrundrauschen bedingt durch z.B. Inhomogenitäten in der Klebeverbindung zwischen Glasfaserkabel 1, Verbindungsmittel und Objekt bzw. Bauwerk B oder das Messrauschen des faseroptischen Messinstruments selbst, überschritten werden muss, damit der jeweilige Abschnitt als relevant identifiziert wird. Im Ausführungsbeispiel in den Fig. 10 und 11 handelt es sich dabei um einen Abschnitt des Glasfaserkabels 1 mit einer Betrachtungslänge von 20 cm Länge, wobei der Ursprung in der Darstellung den Ort, an dem der Riss R entstanden ist, angibt.

Fig. 10 zeigt einen an einem Bauwerk B ermittelten Verlauf der Dehnungswerte ε über die Kabellänge L als durchgezogene, mit der Bezeichnung "meas" gekennzeichnete, Linie. Zunächst wird die aktuell gemessene Rissweite wₐₖₜᵤₑₗₗ, beispielsweise durch Integration der Dehnung ε über die Länge L des Glasfaserkabels 1 bestimmt. Im Ausführungsbeispiel wird eine aktuelle Rissweite von wₐₖₜᵤₑₗₗ=0,35 mm berechnet und die maximale je aufgetretene Rissweite wₘₐₓ gesucht.

Dazu wird das vorgegebene Modell herangezogen und die für das Modell angesetzte Rissweite wₘₐₓ des Modells so lange angepasst, bis diejenige maximale Rissweite wₘₐₓ identifiziert ist, die demjenigen örtlichen Modell-Dehnungsmesswertverlauf zugeordnet ist, der am besten mit der ermittelten verteilten Dehnungsmessgröße im identifizierten Abschnitt übereinstimmt. Diese für das Modell ermittelte maximale Rissweite wₘₐₓ wird dann als im interessierenden Zeitraum tatsächlich aufgetretene, maximale Rissweite wₘₐₓ des Risses R im Bauwerk B angesehen. Im iterativen Verfahren werden im Berechnungsmodell Rissweitenpaare von wₘₐₓ und wₐₖₜᵤₑₗₗ gewählt, und mit den Randbereichen der Messkurve verglichen. Die für den Abgleich verwendeten Rissweitenpaare von wₘₐₓ und wₐₖₜᵤₑₗₗ sind in Tabelle 1 zusammengestellt:

**Tabelle 1: Für den Abgleich zwischen der ermittelten verteilten Dehnungsmessgröße im identifizierten Abschnitt und den örtlichen Modell-Dehnungsmesswertverläufen verwendete Rissweitenpaare.**

| wₘₐₓ | wₐₖₜᵤₑₗₗ |
|---|---|
| 0,5 | 0,35 |
| 0,6 | 0,35 |
| 0,7 | 0,35 |
| 0,8 | 0,35 |
| 0,9 | 0,35 |

Dabei können vorteilhafterweise wieder die Randbereiche der ermittelten verteilten Dehnungsmessgröße mit den Randbereichen der Modell-Dehnungsmesswertverläufe, beispielsweise den Bereichen bis zum ersten lokalen Maximum oder einem markanten Wendepunkt, verglichen werden, wie dies in Fig. 11 dargestellt ist. Die Messdaten im Randbereich befinden sich zwischen den berechneten Kurven von wₘₐₓ= 0,7mm und wₘₐₓ=0,8 mm.

Optional kann auch der gesamte Verlauf, der Bereich zwischen den Wendepunkten, der Bereich um ein bzw. das Maximum bzw. Minimum des Verlaufs oder nur ein Teil wie z.B. der Anstieg und/oder der Abstieg der ermittelten verteilten Dehnungsmessgröße im identifizierten Abschnitt für den Vergleich mit den Modell-Dehnungsmesswertverläufen des Modells herangezogen werden.

Die Abweichung zwischen den Modell-Dehnungsmesswertverläufen und den ermittelten Verläufen kann dabei visuell oder mit numerischen Berechnungsverfahren ermittelt werden. Auf diese Weise wird im Ausführungsbeispiel in Fig. 11 als maximale, innerhalb der untersuchten Zeitspanne je aufgetretene Rissweite wₘₐₓ=0,73mm ermittelt.

Optional ist auch eine Nachkalibrierung bzw. Nachanpassung der Parameter des Modells anhand weiterer Folgemessungen möglich, was die Genauigkeit des Modells steigert.

Mit einem erfindungsgemäßen Verfahren ist es auch problemlos möglich, mehrere Risse R in einem Bauwerk B auf deren maximale aufgetretene Rissweite wₘₐₓ zu untersuchen. In diesem Fall werden mehrere Abschnitte innerhalb der verteilten Dehnungsmessgröße identifiziert, in dem die Dehnungswerte ε einen vorgegebenen Schwellenwert überschreiten, und jeweils mit den Modell-Dehnungsmesswertverläufen des Modells verglichen.

Ein erfindungsgemäßes Verfahren bzw. eine erfindungsgemäße Vorrichtung können vorteilhafterweise ohne Einschränkung bei jeglichen Objekten, d.h. jeglichen physischen Körpern angewendet werden. So können ein erfindungsgemäßes Verfahren bzw. eine erfindungsgemäße Vorrichtung vorteilhafterweise zur Detektion der maximalen Ausdehnung von Rissen R in natürlichen Objekten wie Boden und Fels- oder Eiskörper, in jeglichen Bauwerken, insbesondere mit oder ohne raumbildende Funktion, in Bauwerksteile, in Fahrzeugen, Fluggeräten, Weltraumfluggeräten, Schiffen und Unterseebooten, aber auch in Anlagen oder Anlagenteilen eingesetzt werden.

## Patentansprüche

1. Verfahren zur Detektion der maximalen Ausdehnung von Rissen (R) in einem Objekt, insbesondere einem Bauwerk (B), innerhalb einer Zeitspanne,
- wobei in dem Objekt, insbesondere dem Bauwerk (B), oder an der Oberfläche des Objekts, insbesondere der Bauwerksoberfläche, ein Glasfaserkabel (1) angeordnet ist, wobei das Glasfaserkabel (1) von einem Hüllschichtaufbau (2) derart umgeben ist, dass bei Überschreiten einer vorgegebenen Grenzkraft (F_{S}) das Glasfaserkabel (1) lokal in Längsrichtung relativ zum Hüllschichtaufbau (2) verschoben wird,
- wobei am Beginn der Zeitspanne eine verteilte faseroptische Referenzmessung im Glasfaserkabel (1) vorgenommen wird und das dabei ermittelte Messergebnis als Referenzmessergebnis zur Verfügung gehalten wird,
- wobei am Ende der Zeitspanne eine verteilte faseroptische Folgemessung im selben Glasfaserkabel (1) vorgenommen wird und basierend auf den Unterschieden zwischen der Referenzmessung und der verteilten faseroptischen Folgemessung eine Verteilung der durch Risse (R) im Objekt, insbesondere in dem Bauwerk (B), bedingten Dehnungswerte (ε) über die Kabellänge (L) des Glasfaserkabels (1) ermittelt wird, **dadurch gekennzeichnet,**
- **dass** ein Modell vorgegeben wird, das für eine Anzahl von maximalen Rissweiten (wₘₐₓ) jeweils zumindest einen örtlichen Modell-Dehnungsmesswertverlauf aufweist, der die lokale Dehnung (ε) des Glasfaserkabels (1) über einen Teil der Kabellänge (L) des Glasfaserkabels (1) im Bereich eines Risses (R) mit der jeweiligen maximalen Rissweite (wₘₐₓ) vorgibt,
- **dass** zumindest ein Abschnitt innerhalb der verteilten Dehnungsmessgröße identifiziert wird, in dem die Dehnungswerte (ε) einen vorgegebenen Schwellenwert überschreiten,
- **dass** die ermittelte verteilte Dehnungsmessgröße in dem zumindest einen identifizierten Abschnitt mit den örtlichen Modell-Dehnungsmesswertverläufen des Modells in Übereinstimmung gebracht wird und nach derjenigen maximalen Rissweite (wₘₐₓ) gesucht wird, die demjenigen örtlichen Modell-Dehnungsmesswertverlauf zugeordnet ist, der am besten mit der ermittelten verteilten Dehnungsmessgröße im identifizierten Abschnitt übereinstimmt, und
- **dass** die bei optimaler Übereinstimmung im vorgegebenen Modell verwendete Rissweite als Messgröße für die maximale Rissweite (wₘₐₓ) des jeweiligen tatsächlichen Risses (R) innerhalb der Zeitspanne im Objekt, insbesondere dem Bauwerk (B), angesehen wird.

2. Verfahren nach Anspruch 1, **dadurch gekennzeichnet, dass** das Modell für jede maximale Rissweite (wₘₐₓ) jeweils eine Vielzahl von örtlichen Modell-Dehnungsmesswertverläufen über einen Teil der Kabellänge (L) des jeweiligen Glasfaserkabels (1) umfasst,
wobei jeder dieser, derselben maximalen Rissweite (wₘₐₓ) zugeordneten, örtlichen Modell-Dehnungsmesswertverläufe jeweils einem Dehnungsmesswertverlauf entspricht, der sich durch Entlastung des Glasfaserkabels (1) nach Erreichen der maximalen Rissweite (wₘₐₓ) ergibt, wenn sich die jeweils aktuelle Rissweite (wₐₖₜᵤₑₗₗ) im Lauf der Zeit verringert und bei dem jeweils ein Schlupf (V_{SL}) zwischen dem Glasfaserkabel (1) und dem Hüllschichtaufbau (2) als dauerhafte Verschiebung zurückbleibt.

3. Verfahren nach Anspruch 1 oder 2, **dadurch gekennzeichnet, dass** das Modell für zumindest eine Kombination, insbesondere eine Vielzahl vorgegebener Kombinationen, von Werkstoff, insbesondere Baustoff, Glasfaserkabel (1) und Hüllschichtaufbau (2) jeweils eine Vielzahl von örtlichen Modell-Dehnungsmesswertverläufen bei der jeweiligen maximalen Rissweite (wₘₐₓ) umfasst.

4. Verfahren nach einem der vorangehenden Ansprüche, **dadurch gekennzeichnet,**
- **dass** als Modell ein durch eine Mehrzahl an vorgebbaren Parametern definiertes mechanisches Modell vorgegeben wird, wobei insbesondere vorgesehen ist, dass die Parameter des mechanischen Modells anhand von Referenzversuchen an einem Probekörper (P) ermittelt werden, oder
- **dass** das Modell anhand von Referenzversuchen an zumindest einem Probekörper (P) ermittelt wird.

5. Verfahren nach einem der vorangehenden Ansprüche, **dadurch gekennzeichnet, dass** als Modell ein durch Vorgabe von Materialparametern bestimmtes mechanisches Modell ermittelt wird, wobei der Verlauf der Dehnungswerte (ε) über die Kabellänge (L) des Glasfaserkabels (1) anhand des Zusammenwirkens zwischen
- einem ersten, das Glasfaserkabel (1) repräsentierenden, Stabelement mit einer linear elastischen Dehnsteifigkeit D₁ = E_{F}A_{F}, wobei E_{F} den Elastizitätsmodul und A_{F} die Querschnittsfläche des Glasfaserkabels (1) angeben,
- einem zweiten, den Hüllschichtaufbau (2) repräsentierenden, Stabelement mit einer linear elastischen Dehnsteifigkeit D₂ = E_{S}A_{S}, wobei E_{S} den Elastizitätsmodul und A_{S} die Querschnittsfläche des Hüllschichtaufbaus (2) angeben,
- einem nicht linearen, insbesondere elasto-plastischen, Federelement mit einer vorgegebenen Grenzkraft (F_{S}) und Steifigkeit (kᵢₙₜ), das als Interaktionselement (4) die Interaktion zwischen dem Glasfaserkabel (1) und dem Hüllschichtaufbau (2) repräsentiert, wobei bei Erreichen der vorgegebenen Grenzkraft (Fₛ) ein Schlupf (V_{SL}) als bleibende Verschiebung des Hüllschichtaufbaus (2) gegenüber dem Glasfaserkabel (1) auftritt,
- sowie gegebenenfalls einem linearen, die Anbindung des Hüllschichtaufbaus (2) an das Objekt, insbesondere das Bauwerk (B), repräsentierenden, Federelement mit einer Federsteifigkeit (k),
berechnet wird.

6. Verfahren nach Anspruch 5, **dadurch gekennzeichnet, dass** die im Modell verwendeten Parameter des Glasfaserkabels (1), des Hüllschichtaufbaus (2), des Interaktionselements (4) und gegebenenfalls der Anbindung des Hüllschichtaufbaus (2) an das Objekt, insbesondere das Bauwerk (B), anhand von Referenzversuchen angepasst werden, indem
- anhand des Modells für zumindest eine vorgegebene Kombination von Werkstoff, insbesondere Baustoff, Glasfaserkabel (1) und Hüllschichtaufbau (2) und für zumindest eine maximale Rissweite (wₘₐₓ) ein Modell-Dehnungsmesswertverlauf berechnet wird und
- der Modell-Dehnungsmesswertverlauf mit dem an zumindest einem Probekörper (P) mit der vorgegebenen Kombination von Werkstoff, insbesondere Baustoff, Glasfaserkabel (1) und Hüllschichtaufbau (2) bei der jeweiligen maximalen Rissweite (wₘₐₓ) gemessenen Verlauf der Dehnungswerte (ε) über die Kabellänge (L) des Glasfaserkabels (1) unter Anpassung der Parameter in Übereinstimmung gebracht wird.

7. Verfahren nach Anspruch 6, **dadurch gekennzeichnet, dass** die Parameter des mechanischen Modells unter Anwendung eines Optimierungsverfahrens angepasst werden, bis eine vorgegebene Übereinstimmung der Randbereiche, insbesondere jeweils der Bereiche bis zum ersten lokalen Maximum, vorzugsweise dem Wendepunkt, der ermittelten verteilten Dehnungsmessgröße und des Modell-Dehnungsmesswertverlaufs, insbesondere unter Anwendung der Methode der kleinsten Quadrate, festgestellt wird.

8. Verfahren nach einem der vorangehenden Ansprüche, **dadurch gekennzeichnet, dass** das Modell anhand einer Referenzversuchsreihe kalibriert wird,
- wobei an zumindest einem Probekörper (P) mit einer vorgegebenen Kombination von Werkstoff, insbesondere Baustoff, Glasfaserkabel (1) und Hüllschichtaufbau (2) eine verteilte faseroptische Versuchs-Referenzmessung im Glasfaserkabel (1) vorgenommen wird,
- wobei der jeweilige Probekörper (P) zunächst belastet wird, bis sich ein Riss (R) im Probekörper mit einer maximalen Rissweite (wₘₐₓ) öffnet, wobei die vorgegebene Grenzkraft (F_{S}) überschritten wird und eine maximale Verschiebung bei der maximalen Rissweite (wₘₐₓ) zwischen dem Glasfaserkabel (1) und dem Hüllschichtaufbau (2) auftritt,
- wobei anschließend der Probekörper (P) entlastet wird, wobei sich der Riss (R) zumindest teilweise wieder schließt und wobei ein Schlupf (V_{SL}) zwischen dem Glasfaserkabel (1) und dem Hüllschichtaufbau (2) als bleibende Verschiebung zurückbleibt,
- wobei während der Be- und Entlastung jeweils verteilte faseroptische Versuchs-Folgemessungen im Glasfaserkabel (1) durchgeführt werden und
- wobei basierend auf den Unterschieden zwischen der Versuchs-Referenzmessung und den verteilten faseroptischen Versuchs-Folgemessungen Verteilungen der durch den Riss (R) im Probekörper (P) bedingten Dehnungswerte (ε) über die Kabellänge (L) ermittelt werden.

9. Verfahren nach einem der vorangehenden Ansprüche, **dadurch gekennzeichnet,**
- **dass** aus der ermittelten verteilten Dehnungsmessgröße in dem zumindest einen identifizierten Abschnitt die aktuelle Rissweite (wₐₖₜᵤₑₗₗ), insbesondere durch Integration der Dehnung (ε) über die Kabellänge (L) des Glasfaserkabels (1), bestimmt wird und
- **dass** ausgehend von der aktuellen Rissweite (wₐₖₜᵤₑₗₗ) die Rissweite des Modells angepasst wird, bis diejenige maximale Rissweite (wₘₐₓ) identifiziert wird, die demjenigen örtlichen Modell-Dehnungsmesswertverlauf zugeordnet ist, der am besten mit der ermittelten verteilten Dehnungsmessgröße im identifizierten Abschnitt, insbesondere deren Randbereichen, übereinstimmt.

10. Verfahren nach einem der vorangehenden Ansprüche, **dadurch gekennzeichnet, dass** für den Vergleich zwischen dem Modell-Dehnungsmesswertverlauf und der ermittelten verteilten Dehnungsmessgröße die Randbereiche der ermittelten verteilten Dehnungsmessgröße in dem zumindest einen identifizierten Abschnitt, insbesondere jeweils die Bereiche bis zum ersten lokalen Maximum, vorzugsweise dem Wendepunkt, herangezogen werden.

11. Verfahren nach einem der vorangehenden Ansprüche, **dadurch gekennzeichnet, dass** das Objekt ein Bodenkörper, ein Felskörper, ein Eiskörper, ein Bauwerk, ein Bauwerksteil, ein Fahrzeug, ein Fluggerät, ein Weltraumfluggerät, ein Schiff, ein Unterseeboot, eine Anlage oder ein Anlagenteil ist.

12. Anordnung zur Detektion der maximalen Ausdehnung von Rissen (R) in einem Objekt, insbesondere einem Bauwerk (B), innerhalb einer Zeitspanne umfassend ein in und/oder an dem Objekt, insbesondere dem Bauwerk (B), angeordnetes Glasfaserkabel (1), wobei das Glasfaserkabel (1) von einem Hüllschichtaufbau (2) derart umgeben ist, dass bei Überschreiten einer vorgegebenen Grenzkraft (F_{S}) das Glasfaserkabel (1) lokal in Längsrichtung relativ zum Hüllschichtaufbau (2) verschoben wird, und eine Mess- und Verarbeitungseinheit an das Glasfaserkabel (1) angekoppelt ist und die dazu ausgebildet ist,
- zu vorgegebenen Zeitpunkten jeweils optische Signale in den Glasfaserkern des Glasfaserkabels (1) abzugeben und das reflektierte, zurückkehrende Signal entlang des Glasfaserkerns des Glasfaserkabels (1) zu erfassen und einem räumlichen Ort entlang des Glasfaserkabels (1), insbesondere des Objekts, vorzugsweise des Bauwerks (B), zuzuordnen und
- ein Verfahren gemäß einem der Ansprüche 1 bis 11 durchzuführen und derart die maximale Ausdehnung einzelner Risse (R) zu ermitteln.

## Claims

1. Method for detecting the maximum expansion of cracks (R) in an object, in particular a building (B), within a time period,
- wherein a fibre optic cable (1) is arranged in the object, in particular the building (B), or on the surface of the object, in particular the surface of the building, wherein the fibre optic cable (1) is surrounded by a cladding layer structure (2) such that when a prespecified limit force (Fₛ) is exceeded the fibre optic cable (1) is displaced locally in longitudinal direction relative to the cladding layer structure (2),
- wherein at the beginning of the time period a distributed fibre-optic reference measurement is performed in the fibre optic cable (1) and the measurement result determined thereby is kept available as a reference measurement result,
- wherein at the end of the time period a distributed fibre-optic follow-up measurement is performed in the same fibre optic cable (1) and based on the differences between the reference measurement and the distributed fibre-optic follow-up measurement, a distribution of the strain values (ε) caused by cracks (R) in the object, in particular in the building (B), is determined over the cable length (L) of the fibre optic cable (1),
**characterised in that,**
- a model is specified, which for a number of maximum crack widths (wₘₐₓ) respectively has at least one local model strain measurement value curve which specifies the local strain (ε) of the fibre optic cable (1) over a portion of the cable length (L) of the fibre optic cable (1) in the region of a crack (R) with the respective maximum crack width (wₘₐₓ),
- **in that** at least one section within the distributed strain measurement value is identified in which the strain values (ε) exceed a predetermined threshold,
- **in that** the determined distributed strain measurement value in the at least one identified section is brought into line with the local model strain measurement value curves of the model and a search is made for the maximum crack width (wₘₐₓ) which is assigned to the local model strain measurement value curve which coincides best with the determined distributed strain measurement value in the identified section, and
- **in that** the crack width used with optimal alignment in the specified model is regarded as a measurement value for the maximum crack width (wₘₐₓ) of the respective actual crack (R) within the time period in the object, in particular the building (B).

2. Method according to claim 1, **characterised in that** the model for each maximum crack width (wₘₐₓ) comprises respectively a plurality of local model strain measurement value curves over a portion of the cable length (L) of the respective fibre optic cable (1), wherein each of these local model strain measurement value curves associated with the same maximum crack width (wₘₐₓ) corresponds respectively to a strain measurement value curve which results from relieving the fibre optic cable (1) after the maximum crack width (wₘₐₓ) has been reached, if the respective actual crack width (w_{actual}) is reduced over time and in which in each case a slip (_{VSL}) between the fibre optic cable (1) and the cladding layer structure (2) remains as a permanent displacement.

3. Method according to claim 1 or 2, **characterised in that** the model for at least one combination, in particular a plurality of prespecified combinations of material, in particular building material, fibre optic cable (1) and cladding layer structure (2) comprises respectively a plurality of local model strain measurement value curves at the respective maximum crack width (wₘₐₓ).

4. Method according to any of the preceding claims, **characterised in that**
- a mechanical model defined by a plurality of prespecifiable parameters is specified as the model, wherein it is provided in particular that the parameters of the mechanical model are determined on the basis of reference tests on a test specimen (P), or
- **in that** the model is determined on the basis of reference tests on at least one test specimen (P).

5. Method according to any of the preceding claims, **characterised in that** a mechanical model determined by presetting material parameters is determined as the model, wherein the curve of the strain values (ε) over the cable length (L) of the fibre optic cable (1) is determined on the basis of the interaction between
- a first rod element representing the fibre optic cable (1) with a linear elastic strain stiffness D₁ = E_{F}A_{F}, wherein E_{F} is the modulus of elasticity and A_{F} is the cross-sectional area of the fibre optic cable (1),
- a second rod element representing the cladding layer structure (2) having a linear elastic strain stiffness D₂ = E_{S}A_{S}, wherein Eₛ is the modulus of elasticity and Aₛ is the cross-sectional area of the cladding layer structure (2),
- a non-linear, in particular elasto-plastic, spring element with a predetermined limit force (Fₛ) and stiffness (kᵢₙₜ), which as an interaction element (4) represents the interaction between the fibre optic cable (1) and the cladding layer structure (2), wherein when the prespecified limit force (Fₛ) is reached, a slip (V_{SL}) occurs as a permanent displacement of the cladding layer structure (2) relative to the fibre optic cable (1),
- and if necessary a linear spring element with a spring stiffness (k) representing the connection of the cladding layer structure (2) to the object, in particular the building (B), is calculated.

6. Method according to claim 5, **characterised in that** the parameters of the fibre optic cable (1), of the cladding layer structure (2), of the interaction element (4) and if necessary of the connection of the cladding layer structure (2) to the object, in particular the building (B), used in the model are adapted on the basis of reference tests, in which
- by using the model for at least predetermined combination of material, in particular building material, fibre optic cable (1) and cladding layer structure (2) and for at least one maximum crack width (wₘₐₓ) a model strain measurement value curve is calculated and
- the model strain value measurement curve is brought into line with the curve of the strain values (ε) over the cable length (L) of the fibre optic cable (1) measured on at least one test specimen (P) with the prespecified combination of material, in particular building material, fibre optic cable (1) and cladding layer structure (2) at the respective maximum crack width (wₘₐₓ) by adapting the parameters.

7. Method according to claim 6, **characterised in that** the parameters of the mechanical model are adapted using an optimisation method, until a prespecified match of the edge regions, in particular the regions up to the first local maximum, preferably the turning point, of the determined distributed strain measurement value and the model strain measurement value curve is established, in particular using the method of least squares.

8. Method according to any of the preceding claims, **characterised in that** the model is calibrated using a reference test series,
- wherein a distributed fibre-optic test reference measurement is carried out in the fibre optic cable (1) on at least one test specimen (P) with a predetermined combination of material, in particular building material, fibre optic cable (1) and cladding layer structure (2),
- wherein the respective test specimen (P) is firstly loaded until a crack (R) opens in the test specimen with a maximum crack width (wₘₐₓ), wherein the prespecified limit force (Fₛ) is exceeded and a maximum displacement occurs at the maximum crack width (wₘₐₓ) between the fibre optic cable (1) and the cladding layer structure (2), - wherein subsequently the test specimen (P) is relieved, wherein the crack (R) at least partially closes again and wherein a slip (V_{SL}) between the fibre optic cable (1) and the cladding layer structure (2) remains as a permanent displacement,
- wherein during the loading and unloading respectively distributed fibre-optic test sequence measurements are performed in the fibre optic cable (1) and
- wherein based on the differences between the test reference measurement and the distributed fibre optic test sequence measurements, distributions of the strain values (ε) caused by the crack (R) in the test specimen (P) are determined over the cable length (L),

9. Method according to any of the preceding claims, **characterised in that**
- the actual crack width (w_{actual}), in particular by integrating the strain (ε) over the cable length (L) of the fibre optic cable (1) is determined from the determined distributed strain measurement value in the at least one identified section, and
- on the basis of the actual crack width (w_{actual}) the crack width of the model is adjusted until the maximum crack width (wₘₐₓ) is identified which is associated with the local model strain value measurement curve that best matches the determined strain measurement in the identified section in particular its edge regions.

10. Method according to any of the preceding claims, **characterised in that** for the comparison between the model strain value measurement curve and the determined distributed strain measurement value, the edge regions of the determined distributed strain measurement value in the at least one identified section in particular in each case the regions up to the first local maximum, preferably the turning point, are used.

11. Method according to any of the preceding claims, **characterised in that** the object is a ground body, a rock body, an ice body, a building, a building part, a vehicle, a flying device, a space flying device, a ship, a submarine, a plant or a plant part.

12. Arrangement for detecting the maximum expansion of cracks (R) in an object, in particular a building (B), within a time period comprising a fibre optic cable (1) arranged in and/or on the object, in particular the building (B), wherein the fibre optic cable (1) is surrounded by a cladding layer structure (2) in such a way that when a predetermined limit force (Fₛ) is exceeded, the fibre optic cable (1) is displaced locally in longitudinal direction relative to the cladding layer structure (2), and a measuring and processing unit is coupled to the fibre optic cable (1) and which is configured
- to emit optical signals into the fibre optic core of the fibre optic cable (1) at predetermined times and to detect the reflected returning signal along the fibre optic core of the fibre optic cable (1) and assign it to a spatial location along the fibre optic cable (1), in particular the object, preferably the building (B) and
- to perform a method according to any of claims 1 to 11 and thus to determine the maximum expansion of individual cracks (R).

## Revendications

1. Procédé de détection de l'expansion maximale de fissures (R) dans un objet, en particulier un bâtiment (B), durant un intervalle de temps,
- dans lequel un câble de fibres optiques (1) est agencé dans l'objet, en particulier le bâtiment (B), ou sur la surface de l'objet, en particulier la surface du bâtiment, dans lequel le câble de fibres optiques (1) est entouré par une structure de revêtement (2) de sorte que, lorsqu'une force limite (Fₛ) prédéfinie est dépassée, le câble de fibres optiques (1) est décalé localement dans la direction longitudinale par rapport à la structure de couche de revêtement (2),
- dans lequel au début de l'intervalle de temps, une mesure de référence de fibres optiques répartie est effectuée dans le câble de fibres optiques (1) et le résultat de mesure déterminé est tenu à disposition sous forme de résultat de mesure de référence,
- dans lequel à la fin de la période de temps une mesure de suivi de fibres optiques répartie est effectuée dans le même câble de fibres optiques (1) et, sur la base des différences entre la mesure de référence et la mesure de suivi de fibres optiques répartie, une répartition des valeurs d'expansion (ε) sur la longueur de câble (L) du câble de fibres optiques (1) entraînée par des fissures (R) dans l'objet, en particulier dans le bâtiment (B), est déterminée,
**caractérisé en ce que,**
- un modèle qui présente respectivement au moins un profil de valeurs de mesure d'expansion de modèle localisées pour un nombre de largeurs de fissures maximales (wₘₐₓ), lequel profil spécifie l'expansion locale (ε) du câble de fibres optiques (1) sur une partie de la longueur de câble (L) du câble de fibres optiques (1) dans la zone d'une fissure (R) ayant la largeur de fissure maximale respective (wₘₐₓ),
- au moins une partie, dans laquelle les valeurs d'expansion (ε) dépassent une valeur de seuil spécifiée, est identifiée au sein de la valeur de mesure d'expansion répartie,
- la valeur de mesure d'expansion répartie déterminée dans la au moins une partie identifiée est mise en conformité avec les profils de valeurs de mesure d'expansion de modèle localisées du modèle et la largeur de fissures maximale (wₘₐₓ) qui est associée à ce profil de valeurs de mesure d'expansion de modèles localisées qui se conforme au mieux à la valeur de mesure d'expansion répartie déterminée dans la partie identifiée est recherchée, et
- la largeur de fissure utilisée dans le cas de conformité optimale dans le modèle spécifié est considérée comme la valeur de mesure pour la largeur de fissure maximale (wₘₐₓ) de la fissure réelle respective (R) durant l'intervalle de temps dans l'objet, en particulier le bâtiment (B).

2. Procédé selon la revendication 1, **caractérisé en ce que** le modèle pour chaque largeur de fissure maximale (wₘₐₓ) comprend respectivement une pluralité de profils de valeurs de mesure d'expansion de modèles localisées sur une partie de la longueur de câble (L) du câble de fibres optiques (1) respectif,
dans lequel chacune de ces valeurs de mesure d'expansion de modèle localisées attribuées à la même largeur de fissure maximale (wₘₐₓ) correspond respectivement à un profil de valeurs de mesure d'expansion qui est obtenu en déchargeant le câble de fibres optiques (1) après que la largeur de fissure maximale (wₘₐₓ) a été atteinte, lorsque la largeur de fissure actuelle respective (wₐₖₜᵤₑₗₗ) diminue au cours du temps et pour laquelle respectivement un glissement (V_{SL}) demeure entre le câble de fibres optiques (1) et la structure de couche de revêtement (2) sous forme de déplacement permanent.

3. Procédé selon la revendication 1 ou 2, **caractérisé en ce que** le modèle pour au moins une combinaison, en particulier une pluralité de combinaisons prédéfinies, de matériau, en particulier de matériau de construction, de câbles de fibres optiques (1) et de structure de couche de revêtement (2), présentent respectivement une pluralité de profils de valeurs de mesure d'expansion de modèles localisées pour la largeur de fissure maximale respective (wₘₐₓ).

4. Procédé selon l'une quelconque des revendications précédentes, **caractérisé en ce que**,
- un modèle mécanique défini par une pluralité de paramètres pouvant être prédéfinis est spécifié en tant que modèle, dans lequel il est prévu en particulier que les paramètres du modèle mécanique soient déterminés au moyen de tests de référence sur un échantillon (P), ou
- le modèle est déterminé au moyen de tests de référence sur au moins un échantillon (P).

5. Procédé selon l'une quelconque des revendications précédentes, **caractérisé en ce qu'**un modèle mécanique déterminé défini par spécification de paramètres de matériau est déterminé en tant que modèle, dans lequel le profil des valeurs d'expansion (E) sur la longueur de câble (L) du câble de fibres optiques (1) est calculé au moyen de l'interaction entre
- un premier élément de tige représentant le câble de fibres optiques (1) présentant une rigidité d'expansion élastique linéaire D₁ = E_{F}A_{F}, dans lequel E_{F} indique le module d'élasticité et A_{F} indique la surface de section transversale du câble de fibres optiques (1),
- un second élément de tige représentant la structure de couche de revêtement (2) présentant une rigidité d'expansion élastique linéaire D₂ = EsAs, dans lequel Eₛ indique le module d'élasticité et Aₛ indique la surface de section transversale de la structure de couche de revêtement (2),
- un élément de ressort non linéaire, en particulier élasto-plastique présentant une force limite prédéterminée (Fₛ) et une rigidité (kᵢₙₜ), qui représente en tant qu'élément d'interaction (4) l'interaction entre le câble de fibres optiques (1) et la structure de couche de revêtement (2), dans lequel, lorsque la force limite prédéterminée (Fₛ) est atteinte, un glissement (V_{SL}) se produit en tant que déplacement permanent de la structure de couche de revêtement (2) par rapport au câble de fibres optiques (1),
- et éventuellement un élément de ressort non linéaire présentant une rigidité de ressort (k) représentant le rattachement de la structure de couche de revêtement (2) à l'objet, en particulier le bâtiment (B).

6. Procédé selon la revendication 5, **caractérisé en ce que** les paramètres, utilisés dans le modèle du câble de fibres optiques (1), de la structure de couche de revêtement (2), de l'élément d'interaction (4) et éventuellement du rattachement de la structure de couche de revêtement (2) à l'objet, en particulier le bâtiment (B), sont adaptés au moyen des tests de référence, dans la mesure où
- sur la base du modèle pour au moins une combinaison prédéfinie de matériau, en particulier de matériau de construction, de câble de fibres optiques (1) et de structure de couche de revêtement (2) et pour au moins une largeur de fissure maximale (wₘₐₓ), un profil de valeurs de mesure d'expansion de modèle est calculé et
- le profil de valeurs de mesure d'expansion de modèle avec le profil des valeurs d'expansion (ε) sur la longueur de câble (L) du câble de fibres optiques (1), mesuré au niveau d'au moins un échantillon (P) présentant la combinaison prédéfinie de matériau, en particulier de matériau de construction, de câble de fibres optiques (1) et de structure de couche de revêtement (2) pour la largeur de fissure maximale respective (wₘₐₓ) est mis en conformité en adaptant les paramètres.

7. Procédé selon la revendication 6, **caractérisé en ce que** les paramètres du modèle mécanique sont adaptés à l'aide d'un procédé d'optimisation jusqu'à ce qu'une correspondance prédéterminée des régions marginales, en particulier respectivement des régions jusqu'au premier maximum local, de préférence le point d'inflexion, de la grandeur de mesure d'expansion répartie déterminée et du profil de valeurs de mesure d'expansion de modèle, soit constatée en particulier à l'aide de la méthode des moindres carrés.

8. Procédé selon l'une quelconque des revendications précédentes, **caractérisé en ce que** le modèle est étalonné au moyen d'une série de tests de référence,
- dans lequel une mesure de référence de test de fibres optiques répartie dans le câble de fibres optiques (1) est effectuée au niveau d'au moins un échantillon (P) avec une combinaison prédéterminée de matériau, en particulier de matériau de construction, de câbles de fibres optiques (1) et de structure de couche de revêtement (2),
- dans lequel l'échantillon respectif (P) est tout d'abord chargé jusqu'à ce qu'une fissure (R) dans l'échantillon avec une largeur de fissure maximale (wₘₐₓ) s'ouvre, dans lequel la force limite prédéterminée (Fₛ) est dépassée et un déplacement maximal pour la largeur de fissure maximale (wₘₐₓ) se produit entre le câble de fibres optiques (1) et la structure de couche de revêtement (2), dans lequel ensuite l'échantillon (P) est déchargé, dans lequel la fissure (R) se referme au moins partiellement et dans lequel un glissement (V_{SL}) entre le câble de fibres optiques (1) et la structure de couche de revêtement (2) demeure sous la forme de déplacement permanent.
- dans lequel pendant la charge et décharge, des mesures de suivi de test de fibres optiques réparties respectivement sont réalisées dans le câble de fibres optiques (1) et
- dans lequel sur la base des différences entre la mesure de référence de test et les mesures de suivi de test de fibres optiques réparties, des répartitions des valeurs d'expansion (ε) entraînées par la fissure (R) dans l'échantillon (P) sont déterminées sur la longueur de câble (L).

9. Procédé selon l'une quelconque des revendications précédentes, **caractérisé en ce que**,
- à partir de la grandeur de mesure d'expansion répartie déterminée dans la au moins une partie identifiée, la largeur de fissure actuelle (wₐₖₜᵤₑₗₗ) est déterminée en particulier par l'intégration de l'expansion (ε) sur la longueur de câble (L) du câble de fibres optiques (1) et
- **en ce que** à partir de la largeur de fissure actuelle (wₐₖₜᵤₑₗₗ), la largeur de fissure du modèle est adaptée, jusqu'à ce que la largeur de fissure maximale (wₘₐₓ), qui est associée au profil de valeurs de mesure d'expansion de modèle localisées, soit identifiée, lequel profil correspond le mieux à la grandeur de mesure d'expansion répartie déterminée dans la partie identifiée, en particulier dans les régions marginales de celle-ci.

10. Procédé selon l'une quelconque des revendications précédentes, **caractérisé en ce que** pour la comparaison entre le profil de valeurs de mesure d'expansion de modèle et les grandeurs de mesure d'expansion réparties déterminées, les régions marginales des grandeurs de mesure d'expansion réparties déterminées dans la au moins une partie identifiée, en particulier respectivement les régions jusqu'au premier maximum local, de préférence le point d'inflexion, sont sollicitées.

11. Procédé selon l'une quelconque des revendications précédentes, **caractérisé en ce que** l'objet est un corps de sol, un corps de roche, un corps de glace, un bâtiment, une partie de bâtiment, un véhicule, un aéronef, un engin spatial, un navire, un sous-marin, une installation ou un partie d'installation.

12. Ensemble pour détecter l'expansion maximale de fissures (R) dans un objet, en particulier un bâtiment (B), durant un laps de temps, comprenant un câble de fibres optiques (1) disposé dans et/ou sur l'objet, en particulier le bâtiment (B), dans lequel le câble de fibres optiques (1) est entouré par une structure de couche de revêtement (2), de telle sorte que, lorsqu'une force limite prédéterminée est dépassée (Fₛ), le câble de fibres optiques (1) est déplacé localement dans la direction longitudinale par rapport à la structure de couche de revêtement (2), et une unité de mesure et de traitement est couplée au câble de fibres optiques (1) et est conçue
- pour émettre à des moments prédéterminés respectivement des signaux optiques dans le noyau de fibres optiques du câble de fibres optiques (1) et pour détecter le signal de retour réfléchi le long du noyau de fibres optiques du câble de fibres optiques (1) et associer à un lieu spatial le long du câble de fibres optiques (1), en particulier de l'objet, de préférence du bâtiment (B), et
- pour réaliser un procédé selon l'une quelconque des revendications 1 à 11 et déterminer ainsi l'expansion maximale des différentes fissures (R).
